# EUROPEAN PATENT SPECIFICATION

(11) **EP 0 990 215 B1**
(45) Date of publication and mention of the grant of the patent: **25.02.2004**
(21) Application number: 98930887.9
(22) Date of filing: 18.06.1998
(51) Int. Cl.: G06F 17/60

(54) **SYSTEM AND METHOD FOR GENERATING COMPLIANCE RULES FOR TRADING SYSTEMS**
SYSTEM UND VERFAHREN ZUM ERSTELLEN VON ERFÜLLUNGSREGELN FÜR HANDELSYSTEME
SYSTEME ET PROCEDE DE PRODUCTION DE REGLES DE CONFORMITE POUR DES SYSTEMES COMMERCIAUX

(30) Priority: 20.06.1997 GB 9713106
(43) Date of publication of application: 05.04.2000
(73) Proprietor: Lombard Risk Systems Limited, London EC4A 1AJ (GB)
(72) Inventor: BEALE, Nicholas, Clive, Landsdowne, London W1X 7LF (GB)
(74) Representative: Skone James, Robert Edmund
(86) International application number: PCT/GB1998/001785
(87) International publication number: WO 1998/059307

(56) References cited:
- US-A- 4 903 201
- US-A- 5 446 885
- EDMONDS A N ET AL: "Genetic programming of fuzzy logic production rules with application to financial trading" NEURAL NETWORKS IN FINANCIAL ENGINEERING. PROCEEDINGS OF THE THIRD INTERNATIONAL CONFERENCE ON NEURAL NETWORKS IN THE CAPITAL MARKETS, PROCEEDINGS OF THE 3RD INTERNATIONAL CONFERENCE ON NEURAL NETWORKS IN FINANCIAL ENGINEERING, LONDON, UK, 11-13 OCT., pages 179-188, XP002036802 ISBN 981-02-2480-X, 1996, SINGAPORE, WORLD SCIENTIFIC, SINGAPORE
- COFFEY B: "Compliance moves forward portfolio management" WALL STREET & TECHNOLOGY, SUMMER 1997, MILLER FREEMAN, USA, vol. suppl.issue, page 28, 30, 32 XP002036803 ISSN 1060-989X

## Description

The present invention relates to a method and system for monitoring transactions carried out in a trading system. The present invention also relates to a method and system for generating trading behaviours.

Financial trading systems, such as those used in the stock-market, money-market and derivatives-markets, make extensive use of computer systems to capture and manipulate information about the markets and the trades performed. Because of the complexity of markets and products and the enormous volumes of data, sophisticated computer systems are used to assess and manage the risks involved. An example of such a system is the OBERON system which allows dealers and their managers to assess their exposure to various forms of financial risk, and the OBERISK system which consolidates information from various financial trading systems to provide information about capital adequacy and value at risk. Given a set of Compliance Rules which can be expressed in computerisable form, it is relatively straightforward to build a computer system which scans the available data and looks for apparent breaches of these Rules, as for example in the BT CREDIT CARD FRAUD MONITORING SYSTEM. However, because of the complexity of such markets and the large sums of money involved, from time to time banks and other organisations suffer substantial losses when one or more ingenious individuals exploit loopholes in the rules to conduct trades which are apparently successful and compliant but which prove to have been disastrous (Barings, Sumitomo, GE, NatWest etc...). Once these loopholes have come to the attention of the companies they are usually blocked, but by which time it is too late.

In accordance with a first aspect of the present invention there is provided a system for generating compliance rules, the system comprising
a compliance rule memory for storing compliance rules; generation means for automatically generating virtual trading histories, virtual trading behaviours and/or virtual compliance rules;
selection means for automatically selecting virtual trading histories, virtual trading behaviours and/or virtual compliance rules; and
updating means for storing virtual compliance rules in the compliance rule memory, wherein the virtual compliance rules have been developed with reference to the selected virtual trading histories, virtual trading behaviours and/or virtual compliance rules.

In accordance with a second aspect of the present invention there is provided a method of generating compliance rules, the method comprising
automatically generating virtual trading histories, virtual trading behaviours and/or virtual compliance rules;
automatically selecting virtual trading histories, virtual trading behaviours and/or virtual compliance rules; and
storing virtual compliance rules in a compliance rule memory with reference to the selected virtual compliance rules, virtual trading histories or virtual trading behaviours.

The compliance system generates and selects virtual trading histories or behaviours which may not yet have been observed in the real trading system and which have an appreciable level of apparent irregularity, eg. they may be unusual or unconventional in some way (indicating that they may be fraudulent) or they may carry an unacceptable level of risk. Alternatively the compliance system generates and selects virtual compliance rules.

The present invention provides a system which can detect irregular trading histories before or soon after they are carried out in the real trading system. This is achieved by generating and selecting irregular trading histories or behaviours in a virtual trading environment. The selected irregular trading histories or behaviours can then be reviewed by a human compliance officer who can formulate appropriate new virtual compliance rules.

The present invention effectively provides a virtual trading system - ie. the compliance rule memory is continually updated with reference to the performance of the virtual histories, behaviours or rules in a virtual trading system.

The virtual trading system may be separated either temporally or physically away from the real trading system, as discussed below.

That is, in one example the same computers are used to process transactions in the real trading systems and to generate the virtual compliance rules. In this case these two functions are typically performed at different times, ie. the functions of the virtual trading system are performed when the real trading system (or a particular trading computer which makes up the trading system) is not presently being used for trading. In this case the virtual trading system is effectively temporally separated from the real trading system. This maximises use of the processing power of the real trading system and at the same time ensures that the performance of the real trading system is not degraded. Alternatively the two functions may be run simultaneously but with the virtual compliance rule function at a lower priority.

In a second example, the compliance system may be created physically located in a separate computer. In this case the virtual trading system is effectively physically separated from the real trading system. The compliance system continually updates the compliance rule memory with reference to the behaviour of a virtual trading system in which virtual trading histories or behaviours are cultivated by the cultivation means. This ensures that the performance of the real dealing system is not degraded.

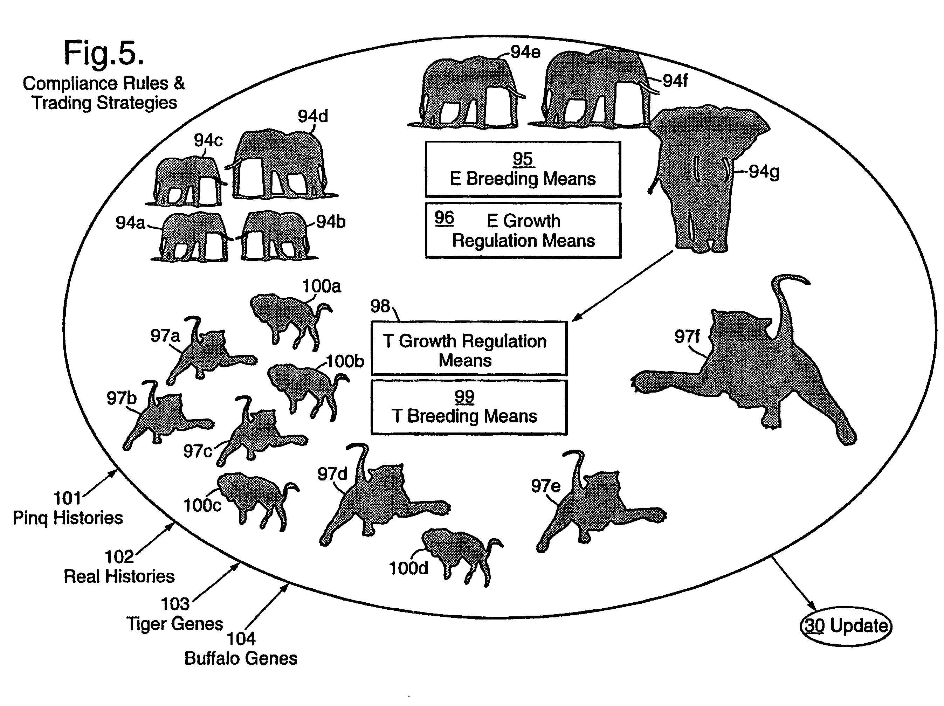

Typically the virtual trading histories each comprise a sequence of transactions, and the virtual trading behaviours each comprise a set of rules relating to trading strategy (an example of which is given by the "tigers" illustrated in Figure 5). The virtual compliance rules comprise rules which determine whether a transaction or sequence of transactions is compliant.

In one example the generation means independently generates virtual histories, behaviours or rules without any reference to the real trading system. For example the virtual trading histories may comprise random sequences of transactions. However in a preferred example the system further comprises extraction means for extracting real trading histories, real trading behaviours and/or real compliance rules from the real trading system and inputting them to the generation means. The preferred example has the advantage that if a loophole is already being exploited by a rogue trader who is carrying out transactions in the real trading system, then the trading histories or behaviours of the rogue trader will be input to the generation means. This makes it more likely that the compliance system will generate a virtual compliance rule which closes the loophole and identifies the rogue trader, and also ensures that the histories are more representative of the real trading behaviour.

Preferably the generation means generates the virtual histories, behaviours or rules by modifying initial histories, behaviours or rules in accordance with a genetic algorithm. Suitable genetic algorithms and evolutionary programming techniques are discussed in the reference book "Michaelewicz, Zbigniew; *Genetic Algorithms* + *Data Structures* = *Evolution Programs;* 3rd Edition Springer, 1996" (hereinafter Michaelewicz). In this case, the genetic algorithms use "genetic material" (such as real trading histories from the real trading system, and/or previously generated virtual trading histories) to "breed" virtual histories, behaviours or rules. For instance the genetic algorithm may comprise selecting a pair of initial histories, behaviours or rules, and "mating" them by extracting a portion of each initial history, behaviour or rule and combining the extracted portions. The pair of initial histories, behaviours or rules may be selected randomly from a pool of initial histories, behaviours or rules. Alternatively each initial trading history, behaviour or rule may have an associated "geographic" factor and the pair of initial histories, behaviours or rules are selected by a "courtship" process in accordance with their respective "geographic" factors.

In one example the virtual compliance rules may be determined by a human compliance officer - ie. the identification means displays the selected virtual trading histories or behaviours and the human compliance officer formulates a suitable virtual compliance rule or rules. In an alternative example the virtual compliance rules are determined automatically - ie. the system further comprises regularisation means for determining the virtual compliance rules from the selected virtual trading histories or behaviours (optionally with suitable human supervision).

In one embodiment the regularisation means generates initial virtual compliance rules from the virtual trading histories or behaviours, and modifies the initial virtual compliance rules in accordance with a genetic algorithm. Suitable genetic algorithms and evolutionary programming techniques are discussed in Michaelewicz.

The histories, rules or behaviours are generally selected on the basis of some predetermined or adaptive (eg neural network) algorithm. In a preferred embodiment the selection means comprises scoring means for determining an apparent level of irregularity of the virtual trading histories; and
identification means for selecting virtual trading histories which exceed a predetermined apparent level of irregularity.

The apparent level of irregularity of the virtual trading histories may be determined in any suitable way. Typically the virtual trading histories each comprise a sequence of virtual transactions, and the scoring means assigns an individual apparent level of irregularity to each virtual transaction, assigns a level of corroboration to some of the virtual transactions, and determines the apparent level of irregularity of the virtual trading history in accordance with the individual apparent levels of irregularity and the levels of corroboration.

Typically the scoring means assigns an individual level of irregularity to each virtual transaction by reference to statistical criteria based on the real trading histories carried out on the real trading system.

The generation means may generate virtual dealing histories which do not comply with the current compliance rules. However in a preferred embodiment the generation means only generates virtual dealing histories which comply with the current compliance rules stored in the compliance rule memory.

The virtual dealing histories may be checked against each one of the current compliance rules. However if this is computationally excessive then the virtual dealing histories could be checked against one or more selected current compliance rules. In one embodiment the virtual dealing histories are checked first against the current compliance rule or rules which are most likely to be broken, and second against one or more current compliance rules which are selected stochastically.

In a preferred embodiment the real trading system comprises a plurality of trading computers connected to a common network, and the compliance monitoring system is implemented by one or more of the plurality of trading computers, typically assisted by one or more dedicated compliance computers. This ensures that the computing power available to the compliance monitoring system increases linearly with the computing power available to the real trading system.

In the present invention, the Compliance Rules used to scan the real trading environment are continually updated by reference also to the behaviour of a simulated virtual trading environment (which we call the Greenhouse), in which Evolutionary Programming techniques along the lines of those described in Michaelewicz are used to cultivate trading behaviours which may contain irregularities and which are not covered by the Compliance Rules, thereby making it possible for new Rules to be developed and added to block loopholes. 'genetic material' from the real ('Wild') trading environment is continually used for breeding 'Cultivated' trading behaviours in the Greenhouse. This means in particular that if a loophole is already being exploited by a trader then the probability of behaviours being cultivated in the Greenhouse which exploit this loophole is considerably increased.

The compliance rules in the compliance rule memory can be used in two ways. In one example the rules are simply consulted by a human Compliance Officer to enable him to make a decision on whether a series of transactions is compliant. In a second example the system further comprises a compliance monitor which monitors transactions carried out on a real trading system with reference to the compliance rules stored in the compliance rule memory.

In accordance with a third aspect of the present invention there is provided a system for generating trading behaviours, the system comprising
a trading behaviour memory for storing trading behaviours;
breeding means for automatically generating virtual trading behaviours; growth regulation means for automatically comparing the virtual trading behaviours with actions of a real trader, and automatically selecting virtual trading behaviours which correspond with the actions of the real trader; and
updating means for storing the selected virtual trading behaviours in the trading behaviour memory.

In accordance with a fourth aspect of the present invention there is provided a method of generating trading behaviours the method comprising automatically generating virtual trading behaviours; automatically comparing the virtual trading behaviours with the actions of a real trader; automatically selecting virtual trading behaviours which correspond with the actions of the real trader; and storing the selected virtual trading behaviours in a trading behaviour memory.

The third and fourth aspects of the invention generate trading behaviours (ie. a set of rules relating to trading strategy) which correctly predict the actions of a real trader.

An example of the invention will now be described with reference to the accompanying drawings, in which:-
FIG 1 is the overall functional block diagram of the Trading Irregularity Detection System;
FIG 2 is an example of how these functions might be distributed between a number of different computers in a distributed system;
FIG 3 is a schematic flow diagram illustrating the functions set out in Table 2;
FIG 3A is a schematic flow diagram illustrating a first alternative to FIG 3;
FIG 3B is a schematic flow diagram illustrating a second alternative to FIG 3;
FIG 4 is a functional block diagram of an alternative Trading Irregularity Detection System in which genetic means are used to devise new compliance rules;
FIG 5 is a schematic diagram of a system for generating trading strategies;
FIG 6 is a diagram illustrating a crossover function;
FIG 7 is a diagram illustrating a breed function; and
FIG 8 is a diagram illustrating in more detail an instance of a crossover function;
Figure 9 is a flow diagram illustrating the growth regulation of a virtual compliance rule;
Figure 10 is a flow diagram illustrating the growth regulation of a virtual trading behaviour;
Figure 11 is a flow diagram illustrating the growth regulation of a "pet" virtual trading behaviour; and

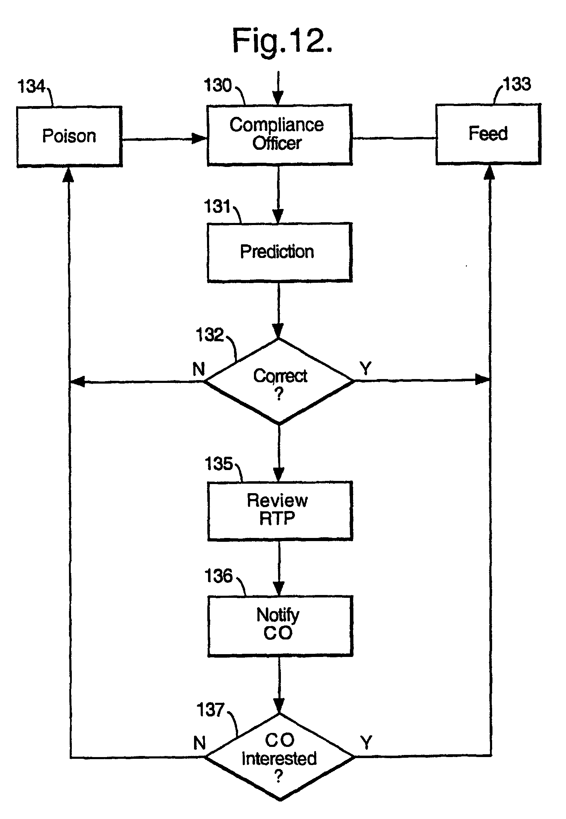

Figure 13 is a flow diagram illustrating the growth regulation of a "pet" virtual compliance rule.

### Example

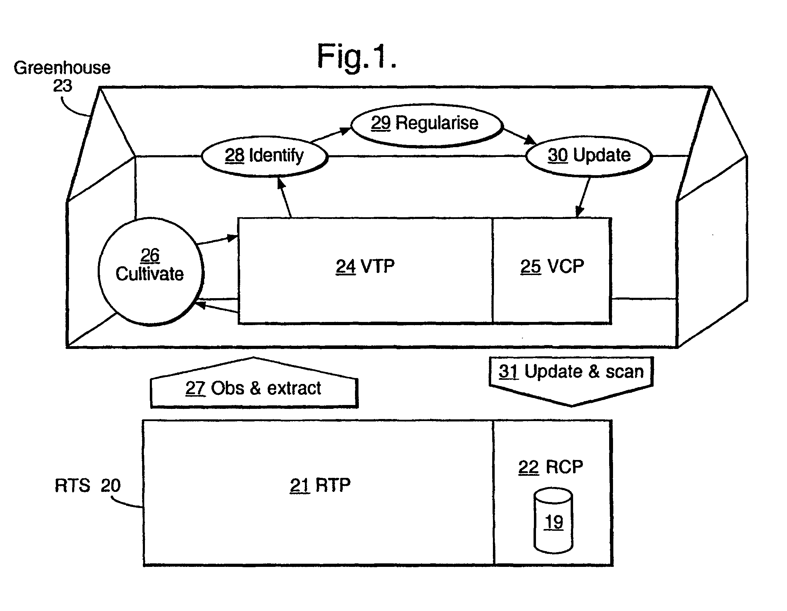

Referring now to the drawings in detail and initially to FIG 1 thereof, there is shown schematically a Trading Irregularity Detection System in which a Real Trading System 20 comprises a Real Trading Part (RTP) 21 and a Real Compliance Part (RCP) 22. The RTP and RCP may both in practice comprise a large number of computers, programs and databases. The Real Compliance Part 22 monitors transactions as they are carried out in the Real Trading Part 21 with reference to a set of compliance rules stored in database 19.

A human Compliance Officer,(not shown) also selectively monitors transactions being carried out in the RTP and attempts to formulate new compliance rules. When the Compliance Officer formulates a new rule, the rule is first saved in database 19 as a soft compliance rule. If the soft compliance rule is broken by a trader then the Compliance Officer is informed. The Compliance Officer can then talk to the trader involved. If a soft compliance rule becomes formally approved by the bank's management then it is converted in the database 19 into a hard compliance rule. Thus the database 19 comprises a mixture of soft compliance rules (which are merely used to inform the Compliance Officer of potentially non-compliant transactions) and hard compliance rules which are used to prevent a transaction from being completed.

The Real Trading System 20 is logically linked to a Greenhouse 23 which contains a Virtual Trading Part 24 and a Virtual Compliance Part 25. Virtual Trading Histories are cultivated using Cultivation means 26 which builds on aspects of Real Trading Histories from RTP 21 observed and extracted by Observation means 27. Virtual Trading Histories which give an appreciable apparent probability of irregularity are identified by Identification means 28 and then virtual compliance rules which cover this are developed by regularisation means 29 and added by updating means 30 to the Virtual Compliance Part 25. Preferably the Real Compliance Part 22 is also updated with these new rules by updating means 31. It may be convenient to allow two stages of updating, a 'scanning' stage in which existing real Trading Histories are scanned by reference to a new rule which has just been introduced into the Greenhouse 25, and a 'full updating' stage in which the new rule, having been proven and examined more thoroughly, is added to the database 19 associated with Real Compliance Part 22. By this time the new rule may have been generalised and merged with other rules in a more convenient whole. Of course this is a logically simplified schematic, and in practice the functions described here may be implemented on a large number of computer systems all connected appropriately, and in particular different aspects of the system identified schematically as separate components may be implemented as a set of logical functions on several computers, possibly logically integrated with other functions shown here separately.

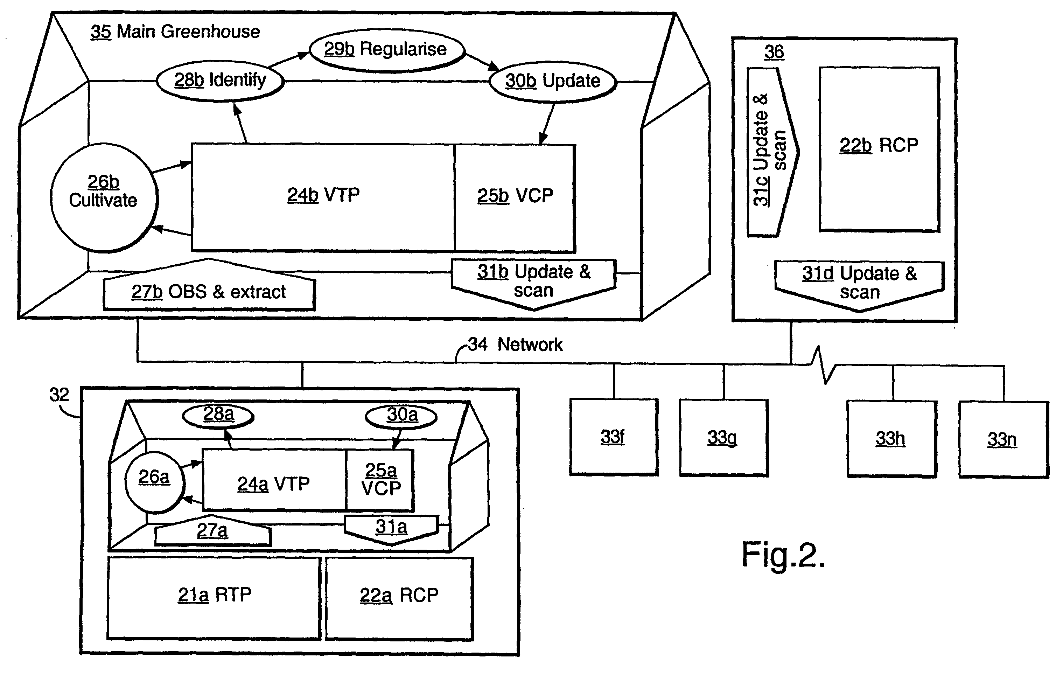

FIG 2 gives an indication of one possible such arrangement of functions between computers. A trading computer 32 implements within itself parts of the Real Trading System 21a and 22a which perform subsets of the Real Trading Part 21 and the Real Compliance Part 22 respectively, as well as parts of the Greenhouse (24a, 25a, 26a, 27a, 28a, 29a, 31a) which perform subsets of the functions 24-31 of Fig 1. Other trading computers 33f, 33g ..33n have a similar internal organisation. They are connected by a network 34 to each other for normal trading purposes and to a Greenhouse computer 35 (which may conveniently be a massively parallel supercomputer) which contains functions 24b-31b which perform other subsets of the functions 24-31 of Fig 1. A Compliance computer 36 then implements the principal parts of the Real Compliance Part 22b together with the compliance updating functions 31c and 31d. It is worth remarking that the greenhouse functions of the Trading Computers 32 and 33f-n can be configured so that they only consume considerable quantities of computer power when the traders are absent from their machines. This allows productive use of the equipment without degrading the performance while the dealers are using it. Even more importantly, it ensures that the computer power available to the Compliance and Greenhouse functions is essentially equal to the sum of computer power available to the Traders, plus the assistance of a supercomputer. The psychological value of having a potential fraudster realise that he is competing against his own trading computer plus the combined power of that of all his colleagues and a central supercomputer is considerable. Clearly other organisations of the distribution of functions between computers are possible.

In Table 1 (see Appendix) we give a simplified illustrative example of a trading system, which will be used to indicate how the components of the Greenhouse could be implemented. There are assumed to be two primitive operations in the system, 40a Trade and 40b Settle so that for example if a (rather inactive) trader executes two simple transactions and has them settled the sequence of primitives might look as in the Example 41. The sequence of transactions 41a-d is an example of what is referred to herein as a "trading history". There are two types of State Variable 42a and 42b which model the size of the 'book' that a Trader holds and the credit extended to or taken from each counterparty. The semantics given at 43 explain how the two primitives modify the state variables, and the initial compliance constraints given at 44 limit the size of the book and the credit exposure to any counterparty. In this simplified illustrative example there is only one trader and one instrument traded, but the system can clearly be generalised to an arbitrary set of instruments or securities by adding an additional parameter to the "quantity" field to describe which security is being considered, and to an arbitrary set of traders by having limits for each trader as well as global limits. It is important to note that the algorithms for selection of mates and of populations will need to have some "geographic" factors to ensure that a level of diversity and "ecological balance" is maintained, and that enough crossovers are non-sterile. The practical issues in managing such a set of constraints in real time over a distributed database are non-trivial but are common to all compliance monitoring systems and are not germane to the present invention.

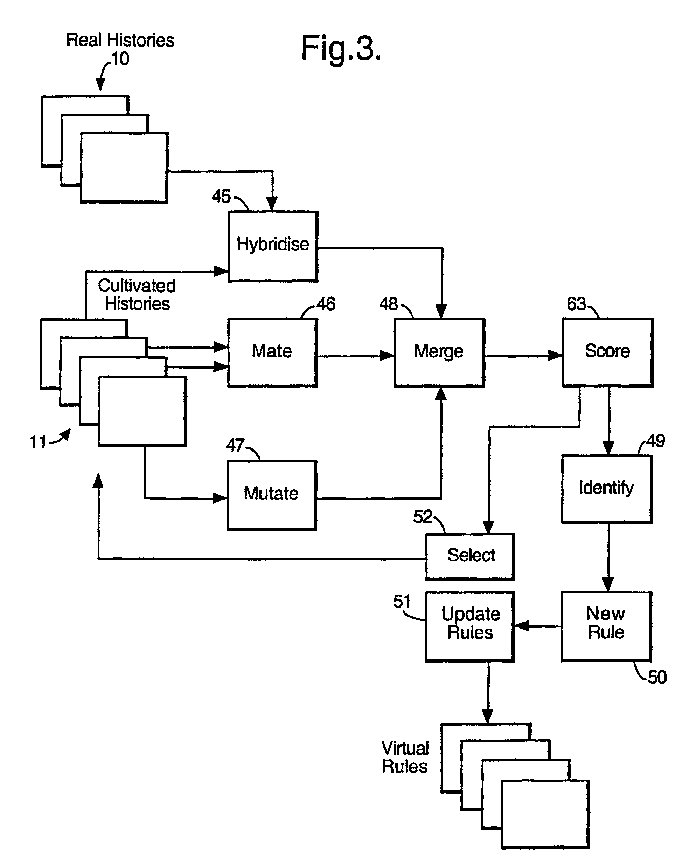

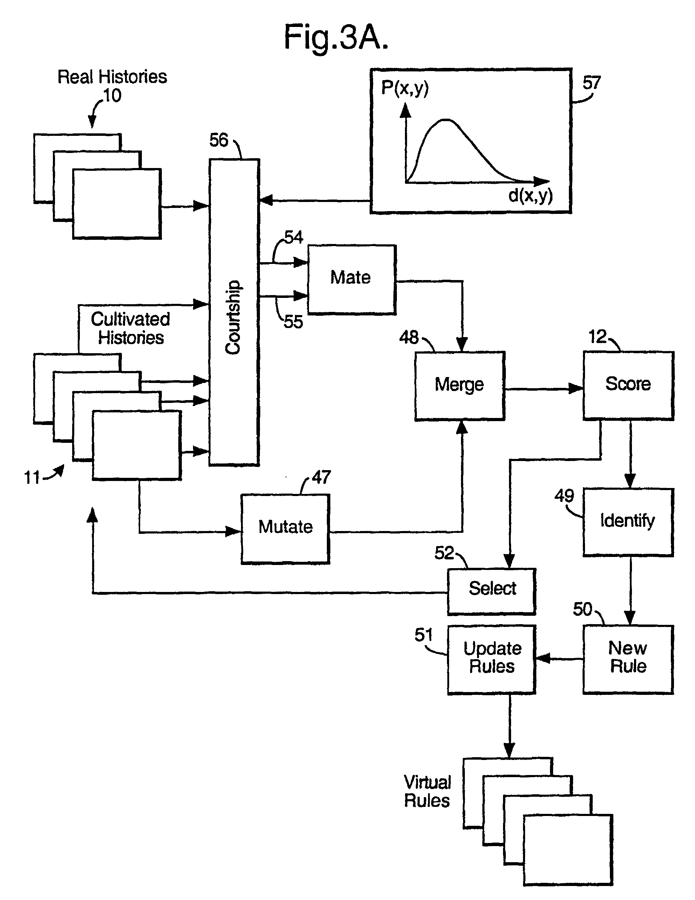

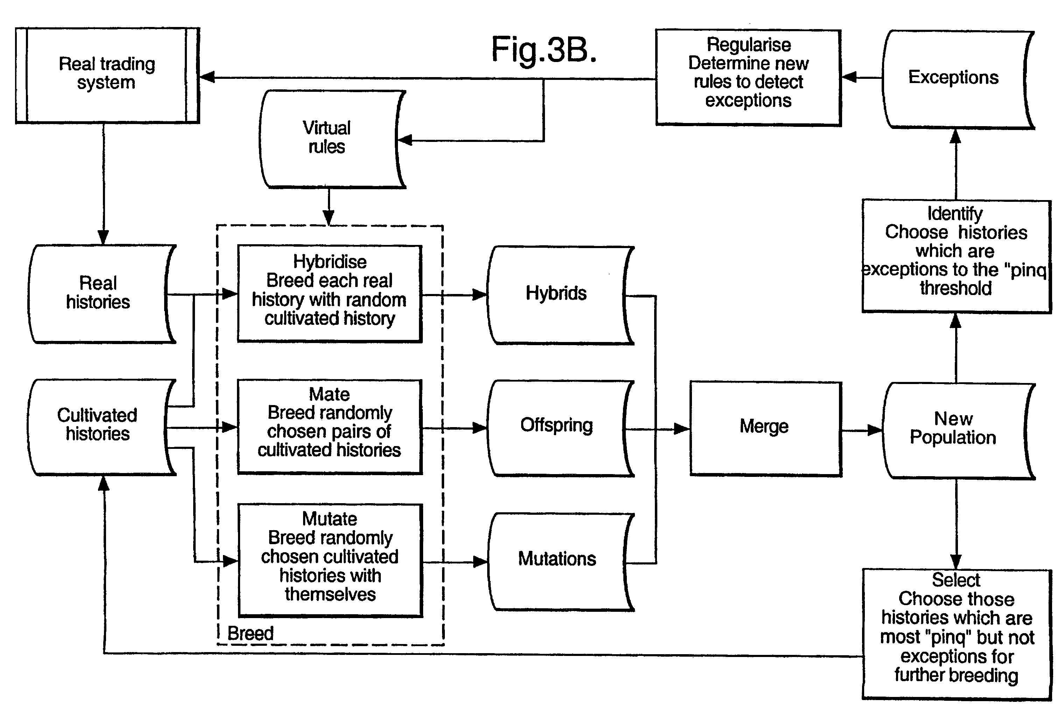

Table 2 now shows a simplified example of how the main Greenhouse functions can be organised. Figure 3 is a process flow diagram illustrating the functions which are expressed in Table 2 in pseudocode. The functions are indicated in Table 2 and Figure 3 using the same reference numerals. The genetic algorithm illustrated in Figure 3 generates new virtual trading histories from a pool of initial trading histories. The pool of initial trading histories comprises real trading histories 10 which have been extracted from the RTP 21 by observation means 27, and previously generated virtual trading histories 11 (i.e. cultivated histories). The following procedure is repeatedly followed: at 45 the Real Histories 10 are hybridized with the Cultivated Histories 11 to produce some Hybrids. At 46 randomly chosen pairs of the Cultivated Histories are 'mated' to produce 'offspring'. Mating and hybridisation are both achieved by using a 'Crossover' procedure which combines parts of the two histories in a randomised way. As is the case with most genetic algorithms, the details of the Crossover procedure have an important influence on the performance of the system, but not on the principles. At 47 some random mutations are applied to the population of Cultivated Histories: again the details of the mutation algorithm will be discussed later. At 48 the results of Hybridization, Mating and Mutation are combined into a single array NewPop, omitting any null elements which may have arisen (due to unsuccessful attempts at repair heuristics, see 56 below) - this is done for clarity in the description and would not necessarily be a separate algorithmic step. At 49 the Exceptions in NewPop are identified from which new rules will be generalised. These Exceptions are identified by means of a scoring function Score 63. The scoring function is also the means whereby the selection step in 52 takes place. At 50 the Exceptions are used to generate new rules. It is sufficient for these illustrative purposes that we assume that this operation is done offline by the human Compliance Officer. There are a number of AI-based tools that can be used to assist him or her in this task, including some 'genetic' approaches which will be discussed in more detail later. The key point to note is that although for simplicity the steps 50 and 51 (where new Virtual Rules are suggested by the Regulate function and the Virtual Rules are updated) are shown as part of the algorithmic loop, they can be done 'offline'. It will be noted that in this simple example we nevertheless flag members of the New Population that have been identified as Exceptions (by setting an attribute WasException to True in 49a). Exceptions are deleted by Merge NNX at step 52 before they become candidates to join the Cultivated Histories. Otherwise there is a danger that the cultivated population becomes swamped by Exceptions of one particular kind, especially if the new rule generalisation is done offline. The fact that we have disclosed this particular optimisation does not of course mean that others would not be used in practice: many practical improvements to the simplified algorithms presented will immediately suggest themselves to those skilled in the art, a number of which are discussed in *Michalewicz.* In the Selection step at 52 members of the new Cultivated population are chosen by randomly selecting from a candidates list (Cands, made by combining the new population derived at 48 with the existing cultivated population less any previous exceptions) in a way that makes the probability of selection proportionate to the Score. A simplified outline method is given at 52a, although in practice some form of sampling without replacement might be used, and an 'elitist' algorithm would also tend to ensure that the highest scoring individual was selected in any event.

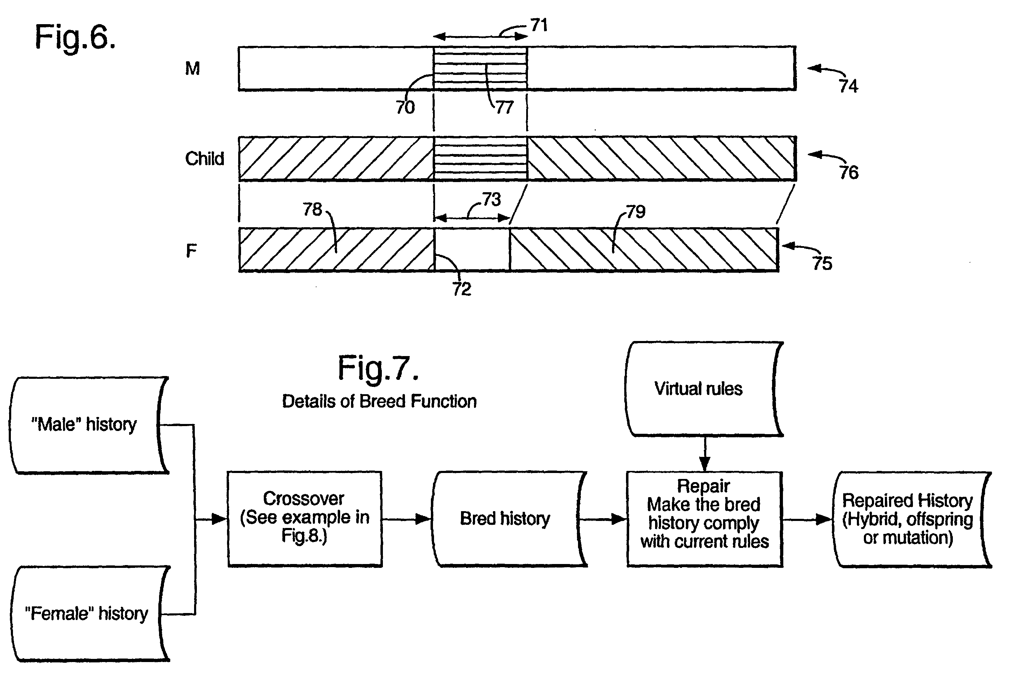

It is of course possible to consider the more detailed mechanism discussed above as an example of a more general procedure in which new members of the cultivated population are produced by mating and crossover from a pool of the Real and Cultivated Histories, relying on chance and the probability distributions of the selection algorithm to ensure that a reasonable mix is maintained of real and cultivated material. This more general procedure is illustrated in Figure 3A. In this example a pair of initial trading histories are selected (by "courtship" function 56) from a pool of initial trading histories, i.e. from the cultivated histories 11 and the real histories 10. Each initial trading history has a "state position" in "state space" which is analogous to geographic location in a natural breeding environment. For instance a trading history associated with a Japanese Warrant trader will have a different state position when compared with a trading history associated with a German Equities trader. The state position may depend on a variety of factors, the choice of which is an engineering matter. For example, they could relate to the prevailing market prices of the instruments which were being traded. The "courtship" function 56 selects pairs of histories x,y in accordance with a probability distribution function of the type illustrated at 57, in which d(x,y) is some suitable distance operator or distance estimate in state space. This does not have to exhibit the classical properties of distance operators although it may be desirable for analytical purposes that it should do so. P(x,y) is the probability of selecting the two histories x,y. As can be seen, it is less likely (although not impossible) that histories with very different state positions will be selected. The probability distribution may also be dependent on whether the histories x,y are real or cultivated histories. Figure 3B illustrates an alternative system, and the "breed" function is illustrated in Figure 7.

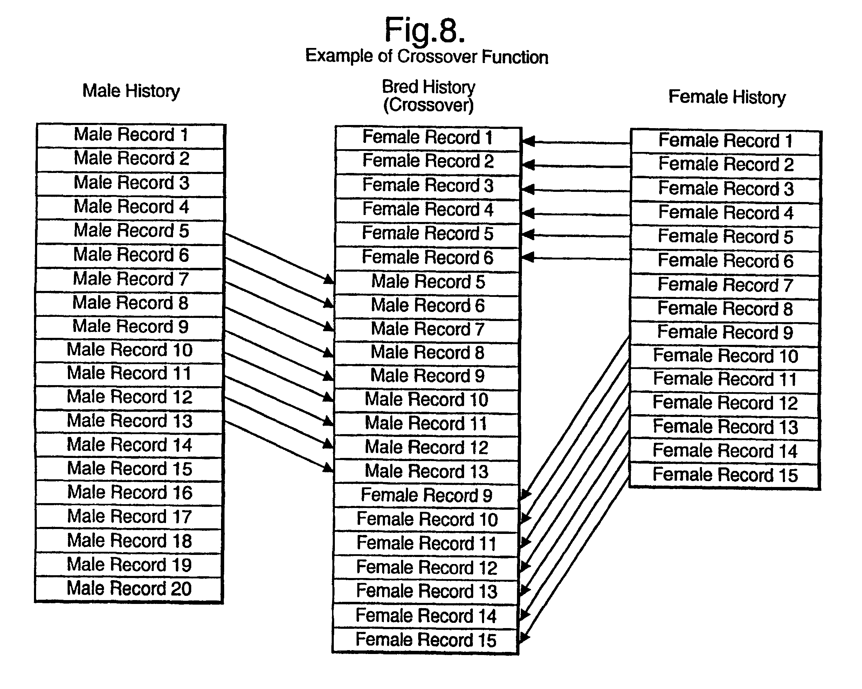

In Table 2 we show simple examples of Crossover and Mutate functions. In Table 3 we also illustrate how the apparent probability of irregularities might be assigned to a simple system to each history in the array of Histories. The crossover function is illustrated graphically in Figures 6 and 8. At 53 (Table 2) in the function XOver which is used to implement Crossover, we choose random points 70,72 (Figure 6) from the end at which to cut the Male and Female Histories 74,75 and random lengths (71,73) of each cut. Preferably a random choice is made which is somewhat biased towards taking recent histories, for example making the probability of choosing the k^{th} element proportional to 1/k. As always, other variants on this distribution can be used without changing the principles. At 54 we then describe the Crossover function. The Crossover function creates a Child 76 by extracting a portion 77 of the male history 74, and combining it with portions 78,79 of the female history 75. The system applies the XOver procedure and then checks that the resultant Child 76 meets the virtual compliance rules. If so, we return Child, but if not we attempt some repair heuristics. If these are successful, ie produce a result of length >0 then we return the result, otherwise we try again. {In this simplified example we are content to have a 'failed' offspring of length 0 but a practical implementation might use a global re-try limit and work within this to get some offspring}. A simplified example of how MakeCompliant might be structured is given at 59. Each of the (Virtual) Rules is assumed to have two methods, a compliance test check which returns True if a History complies, and False otherwise, and RepairHeuristic which either returns a compliant history given a non-compliant one, or a history of length zero. The nature of the RepairHeuristic depends on the rule in question, but it is often enough to delete elements of the History until the compliance test is met. For example outlines of simple RepairHeuristics for CC1 and CC2 are given at 57a and 57b. There are several factors which will occur to those skilled in the art of genetic algorithms relating to these constraints. The practical efficiency of a system will be heavily influenced by the way in which these are handled. On the one hand, some of the constraints may simplify the construction of mutations because it may be possible to generate mutations which satisfy the constraints expeditiously. On the other hand, some of the constraints may be computationally very expensive to explore, and it may be appropriate to use stochastic techniques to reduce the work, and accept that there is a probability that some of the constraints are violated. In particular, it is much less important to check compliance of histories that are not selected in the next generation. Note that, although the general problem of making an optimal Repair Heuristic is "hard" (in the technical sense) the fact that the Male and Female parent are going to be largely compliant (the only constraints they can violate are virtual rules that were added after they were born) should mean that in practice provided suitable "geographic" precautions are taken in the case of complex systems, Repair Heuristics are likely to be reasonably successful.) At 58 we give a very simple mutation function, in which we randomly shuffle some elements of a history using the Crossover function on itself.

Table 2 shows the remaining elements needed for an illustrative example, namely an example of how the Scoring can be done and what form the Histories can take. The first concept to introduce is the concept of Pinq-ness. This is roughly intended as the Probability that an Item is Not Quite correct. Pinq-ness is an estimate of the probability that a trading history merits close attention from a compliance officer. Each element of the History has an individual 'intrinsic' Pinq-ness which is shown as an attribute (H[i]-Pinq). At 60 we show in outline that the Pinq-ness of a History is calculated by summing the Pinq-ness of each element and then deducting any corroborations that are found. This summing is an approximation to the calculation that would be made if each element was statistically independent, ie (1 - the product of (1 - each individual Pinq-ness)). In our simplistic example we will consider the Pinq-ness of each individual transaction as being 1%. But it is important to note that the Pinq-ness of an individual transaction could in practice be set at different values depending on the nature of the transaction, counterparty, and trader, as well as behavioural elements connected with the above. Examples of factors which may be taken into account when assigning a Pinq-ness value to a transaction are:
a) a transaction with (say) a well known bank might be less Pinq than one with a hitherto un-known company;
b) some elements of Pinq-ness could be deduced by means of a statistical analysis of trading patterns, so that trades which were un-usual, or un-usual for that Trader, could be assigned a higher degree of intrinsic Pinq-ness from those that did not have this property (see Table 6); or
c) a trader's voice could be recorded and analyzed for signs of stress - if the trader exhibits signs of stress then this suggests that the transaction should be assigned with a high Pinq-ness value.

It is important to note that no transactions should be considered as having zero Pinq-ness. At 61 we show how the corroboration value of a History is calculated, by looking for individual elements that corroborate other elements. At 62a we show how distance in "state-space" can be used. The method attractiveness calculates attractiveness based on a function of the distance between self and spouse (which is maximised at 1). At 63 we give an example of such a corroboration function: where we regard receiving a settlement from a given counterparty of a sum exactly matching the value of a trade as a strong corroboration. At 62 we indicate that we are going to take the Score equal to the Pinq-ness in this example, although there are arguments for weighting the Pinq-ness by a value at risk and for using some (continuously increasing) function of Pinq-ness for the score, to bias the evolution process appropriately. At 64 we show that in this illustrative example a History Element (class HistElt) is composed of an Entry, a Pinq-ness, a Corrob attribute (initially 0) and an overall PC (Pinq-ness Contribution) attribute (which could be deduced from the Pinq-ness and the Corrob attribute but which is displayed separately for ease of exposition) and at 65 we give an example of a History composed of an array of History Elements, which comes from 41.

Although the idea of intrinsic Pinq-ness is appropriate in this illustrative example, the overall Pinq-ness does not have to be calculated in this way. Other approaches to estimating Pinq-ness would include ones based on a statistical assessment of the overall pattern of the history, possibly in relation to its environment and possibly in relation to the positions of the history in Phase Space. Alternatively, a stochastic approach to assigning pinq-ness could be taken, with simple programs "firing" pinq-ness at histories as they happen to detect untoward features. Many other refinements will suggest themselves to those skilled in the art.

As will be well-known to those skilled in the art, the choice of the methods of defining and calculating Pinq-ness will be sensitive both for the practical efficiency of the system and for the types of fraudulent or questionable behaviour that it can detect. In the following simple example we offer a relatively simple scheme, but issues and refinements are readily added. For example, statistical approaches to assessing Pinq-ness can be made more sophisticated, and various aspects of Compliance Officer behaviour can be observed and learned (either by Genetic Algorithm means as discussed below, or by other well-known means such as Expert Systems or Neural Networks). To reduce the computational workload of calculating Pinq-ness it may also be appropriate for some of the algorithms for adjusting Pinq-ness to be applied on a stochastic basis, periodically examining selected members of the breeding population and adjusting the Pinq-ness estimates up or down. This could be done by several parallel routines, selected if necessary according to the extent to which applying these routines was making significant differences to the estimated Pinq-ness.

Depending on the level of computational resources available, various measures will be necessary or desirable to limit the amount of "search space" explored by the system. For example, there is only limited economic value in detecting and preventing fraudulent behaviour that is remote from the behaviour actually indulged in by any traders or other employees of the Bank in question. Thus the key practical question becomes: what steps could be taken in the next n days by a Trader which might expose the Bank to risk? Consequently, it would be possible to restrict the way in which the mating and mutation functions are applied to limit consideration to short-term continuations of existing trading histories. Such limits might be applied stochastically, so that there was no absolute assurance that a fraud requiring n+1 days to execute would not be detected.

Clearly the Pinq-ness of a trading history might also depend on the market context and general trading conditions. For example relatively large differences between the prices at which securities are bought and sold are less suspicious if the markets are fluctuating considerably than if they are largely stable. Practical implementations might encode such contextual information into the "trading histories". One possibility is for relevant information about trading conditions to be encoded as "recitals" rather like the "WHEREAS" clauses in legal documents. Distinguishing the relevant background information is a non-trivial engineering problem, although for any particular trade there are only a limited number of markets whose conditions are likely to be significant. One possibility is for the system to learn which are relevant market conditions from the behaviour of experienced Compliance Officers by observing the checks that they make.

Table 3 now shows an illustrative example of applying the algorithms described to some simple data. We assume for simplicity that there is only one trader, so only one Real History which is that shown at 65. We will assume that there are 2 Cultivated Histories, and we will initialise them by random Crossovers from the Real History, yielding C1 and C2 illustrated at 81 and 82. We then apply step 45 and Hybridise R1 with C2 (chosen at random). C3 at 83 is obtained, after the Repair Heuristic has removed an additional "Trade(Fred, 10L, $100)" which would have violated CC2 (at 44b). Applying Step 46 Mating we Crossover C1 and C2 to get C4 at 84, and a mutation as Step 47 to give C5 at 85. For the Identify step 49 we will suppose for illustrative purposes that the IdentifyThreshold in 49a is 4%, in which case C4 at 84 has a Pinq-ness over the threshold. This causes its wasException attribute to be set to True, and it is passed to the Compliance Officer to determine whether a new Virtual Rule should be added. He/she may decide that a new rule should be added to the effect that trades must be settled within a certain number of days {again, in practice such a rule would almost certainly be in place, but the point of this very simplified example is to give a simple illustration of the principles. Genetic algorithms are well known for being capable of scaling up relatively well and cope with very complex situations}. For illustrative purposes we will assume that a New Virtual Rule is added at 86. As indicated in the discussion of Fig 1, this new rule could then be used to scan all the Real trades to make sure that none were suspicious, and any violators would be brought to the attention of compliance. Note that this means that another trader who might have been doing un-confirmed trades can be caught as a result of analysing his/her perfectly blameless colleague. Finally the Selection step 52 is performed whereby 2 of the 5 cultivated histories C1, C2, C3, C4 and C5 are chosen at random for survival, with a probability proportional to their Score (possibly with some elitist adjustments). We assume that C2 and C4 survive.

At 87 we give the effect of the next hybridization, mating and mutation steps, using a condensed notation in which for example Trade (Fred, 10, 100) becomes T10F100, with an underline for the elements that have a non-zero corroboration. R1, C2 and C4 are given in this condensed notation for comparison. All the elements in the cultivated histories appear in R1, since they are all derived genetically from it and *in this simplified example* none of the genetic operators introduce new elements. This would not necessarily be the case in a real system, which might have several other genetic operators.

Table 4 illustrates one way in which statistical properties of the traders' behaviour could be used to assign different initial Pinq-ness to different base actions. 91 shows a rolling cumulative tally is kept for each Trader, for each Team and for the Group as a whole of the probability (based on observed behaviour) of a deal with each Counterparty and of the mean and standard deviations of the sizes of the deal. Based on this information, the Pinq-ness of a transaction can be set using suitable heuristics: for example as illustrated at 92 the Pinq-ness could be the mean of the Trader-Pinqness, the Team-Pinqness and the Group-Pinqness and each of these, as suggested at 93, could be calculated by adding the intrinsic Pinq-ness of the Trader (or Team or Group, which could be based on the number of compliance hits previously encountered - and would preferably be algorithmic to avoid people getting excited about 'subjective' judgements) and of the Counterparty and dividing by the probability that the trader deals with the Counterparty and the probability of a deal of that size, based for example on the observed mean and standard deviation of previous deals with that Counterparty.
These Pinq-nesses could also be adjusted based on statistically-derived curves of typical trader behaviour. Such statistics would be interesting to compliance in any case.

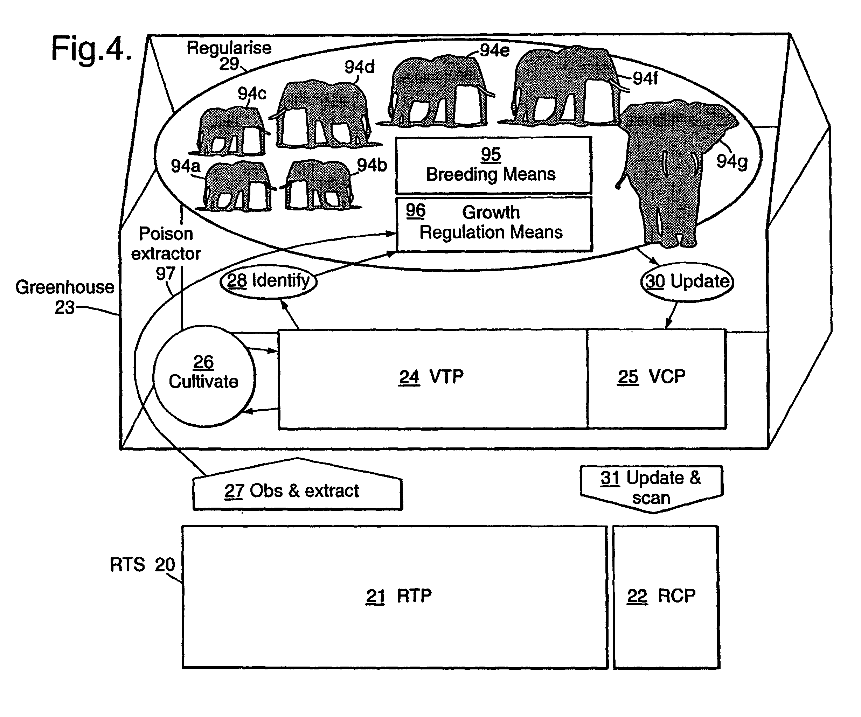

FIG 4 shows a natural extension of the evolutionary aspects of the Greenhouse, in which the compliance rules developed by regularisation means 29 are represented by Elephants. Each Elephant 94a-94g is a potential Compliance Rule and new Elephants are bred (by suitable crossover and mutation and other specialist algorithms, along the lines described above in Figure 3,3A and 3B) at random using Breeding Means 95 and growth regulating means 96, whereby they are "fed" by Pinq Cultivated Histories identified by step 49 (with the "food" being distributed to the Elephants that would preferentially identify the History), and to a lesser extent by Repair Heuristics when they are applied. The Growth Regulating Means 96 also preferably has a source of "poison" so that Elephants are not bred which simply munch good histories, and for this purpose the Real Histories can be used, providing that low doses of the poison are not fatal (so that if an Elephant is fed a Real History that happens to contain an irregularity this will not be fatal to the Elephant), and this is indicated by the link at 97 between function 27 and function 96. One general approach to the evolution and breeding of such Elephants is discussed in Michaelewicz Chapter 12 and is a well-studied topic in the literature. One possibility would be for the Elephant's decision method on how appetizing a History was to be encoded as a Java Method associated with the Elephant, and to apply genetic operations along the lines of those contained in Michaelewicz to the Java code of the Method. The "feeding" and "poisoning" functions contribute to a "weight" parameter. Once an Elephant has a "weight" factor above a certain threshold, then it would be inspected by the Compliance Officer and released into the "wild" to monitor the Real Trading Environment - ie. in the example of Figure 4 the largest compliance rule 94g would be saved in VCP 25 and in RCP 22 as a soft compliance rule. The use of genetically developed "Elephants" is an elegant approach to the issue of devising new compliance rules, but by no means the only one that would be suitable, and in any case it is probable that manual supervision would be required. Careful attention would be given in the design of any practical automated system to ensure that the new Virtual compliance rules did cover all highly Pinq cases identified, with auditing and security measures to ensure that a computer-literate rogue trader was not in some way inhibiting the development of Rules (by whatever means) that would detect his/her preferred irregularity.

The present invention relates to a compliance system. However the principles of the invention could also be implemented in other systems in which the selection means selects virtual trading histories which satisfy some other criteria. For instance the selection means may select better legal money-making virtual trading histories which can then be reviewed to determine new trading strategies for use in the real trading system. An example of this is discussed below with reference to Figure 5.

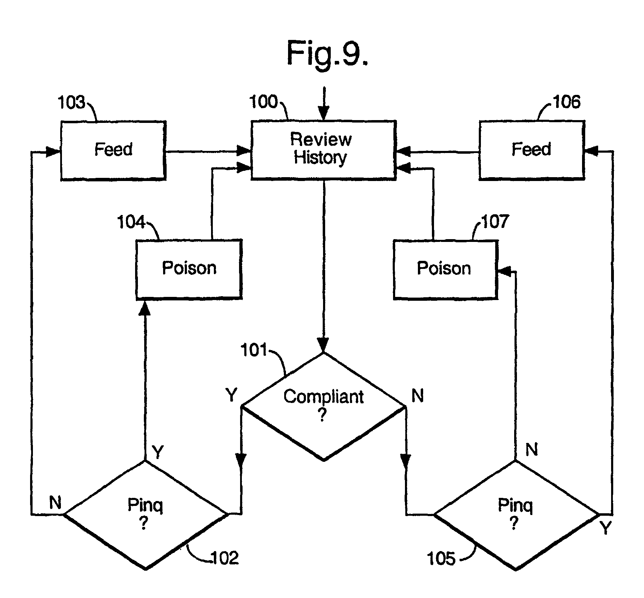

In the most sophisticated embodiment of the present invention, the greenhouse develops both compliance rules 94a-94g (Elephants) and trading behaviours 97a-97f (Tigers). Similar genetic operators can be used for the crossover and mutation of these "programs" but the fitness criteria used for selection are different. Referring to Figure 9, the virtual compliance rules 94 (ie. Elephants) review trading histories at 100. If the history is compliant (step 101) according to the virtual compliance rule 94 then if the trading history has a high Pinq-ness value (step 102) then the Elephant is "fed" (step 103). Otherwise the Elephant 94 is "poisoned" (step 104). If the history is non-compliant (step 101) then if the trading history has a high Pinq-ness value (step 105) then the Elephant is "fed" (step 106). Otherwise the Elephant 94 is "poisoned" (step 107). Poisoning is slow, so that one or two doses weaken, but do not kill.

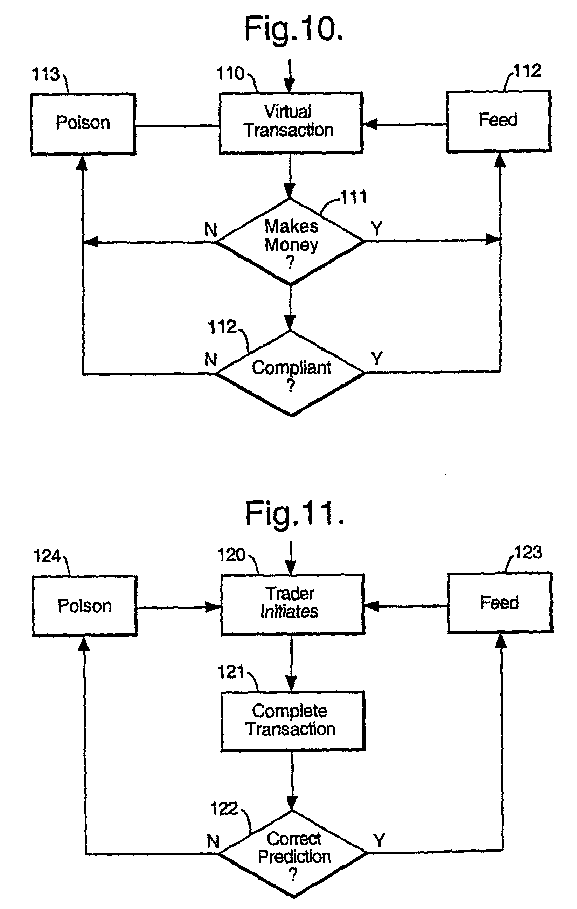

Tigers on the other hand are allowed to trade in the VTP 24, either trading with each other or preferably trading with representations of counterparties 100a-100d (illustratively represented as Buffalo. These might be derived as genetic algorithms or by other means). Referring to Figure 10, the virtual trading behaviours (ie. tigers 97) perform virtual transactions 110 on VTP 24. If the virtual transaction makes money (step 111) then the tiger is "fed" at 112, otherwise it is "poisoned" at 113. If the virtual transaction is compliant (step 112) then the tiger is "fed" at 112, otherwise it is "poisoned" at 113. The degree of poisoning is dependent on the weight of the compliance rule which has been broken.

The tigers 97 can also explicitly learn from observation of Traders' actions as illustrated in Figure 11. A real trader initiates a transaction at 120. One of the tigers 97 then predicts at 121 how the real trader will complete the transaction. If the tiger 97 predicts the action of the trader correctly (step 122) then the tiger 97 is "fed" at 123, otherwise the tiger 97 is "poisoned" at 124. The tiger 97 may also be "fed" by attempting to predict other actions of a real trader. Before making a transaction, a real trader may carry out a number of checks. For instance he could check prevailing prices in other markets, he could check the creditworthiness of the company to be traded with, or he could review news reports from the country of the company to be traded with.

In this way, ie. by comparing the behaviour embodied by the "pet tiger" with the actions of a real trader, a set of "pet Tigers" 97 is generated which are essentially genetic algorithmic representations of the trader's behaviour. The "pet Tigers" are then hybridised with the Tigers in the Greenhouse to produce further genetic input, the basic structure of the algorithms used being of course similar to that in Figure 3. Tigers could also be used to generate Pinq trading histories for consideration in developing new compliance rules.

A simple "Tiger" might be implemented as shown at 151.

In this simple example a Tiger has one "method": Accept Offer. A simplified example of how Accept Offer might be implemented is given a 152.

This very simple Tiger has two price thresholds, buy & sell, and will trade if offered a quantity it can legally hold at a price below buy Threshold or if asked for a quantity it has a price above its sellThreshold.

In practice Tigers would of course be considerably more complicated, and might involve neural networks or other advanced techniques. Different species of Tiger might co-exist, with the Courtship function making it unlikely that the system would try to mate a Neural Net Tiger with a simple decision rule Tiger (but it would not necessarily have to be impossible).

Buffalo are bred in a similar way, preferably with a cluster of pet buffalo assigned to each counterparty (fed when they correctly mirror the actions of the counterparty, poisoned when they do not) and with the cultivated buffalo bred in the same way and trading with the cultivated tigers. In principle they could be subject to the same compliance rules (Elephants) as the Tigers, although in practice it might be wiser to have the buffalo only trampled by real Elephants whereas the Tigers might be trampled by cultivated Elephants as well.

It will be evident to those skilled in the art that it is possible for the Trading Histories of the Tigers to be used as a source of cultivated Histories as well. It would be possible, although may be not desirable, for the genetic aspects of the greenhouse in cultivating histories to be superseded by the zoological functions, so that instead of breeding histories explicitly we just observed the behaviour of the real Traders and the pet and cultivated Tigers and used these histories alone to find Pinq-ness.

By analogy with the concept of "pet Tigers" illustrated in Figure 11 - the compliance rules 94 (ie. elephants) may be bred to become genetic algorithmic representations of the behaviour of the human Compliance Officer. At step 130 the Compliance Officer reviews a set of transactions being performed in the RTP 21. The compliance rules 94 then predict at 131 which particular transactions will be reviewed further by the Compliance Officer. If the prediction is correct (step 132) then the "pet elephant" 94 is fed at 133 - or otherwise "poisoned" at 134.

The "pet elephant " 94 can also review at 135 transactions in the RTP 21. If the "pet elephant" 94 finds a non-compliant then the Compliance Officer is notified at 136. If the transactions are of interest (step 137), then the Compliance Officer causes the "pet elephant" to be "fed" at 133 - or otherwise "poisoned" at 134.

The choice of thresholds for reporting behaviours with high apparent pinq-ness raises the normal engineering issues about false alarms and Type-1 and Type-2 errors. One possibility for dealing with this is to have the Pet Elephants or some other "expert system" or "Neural Net" watch the way in which Compliance Officers deal with the alarms raised, and use this information to make better judgements about whether a behaviour of a given threshold pinq-ness is in fact sufficiently serious to justify reporting, or to use such systems to classify alarms appropriately.

### APPENDIX

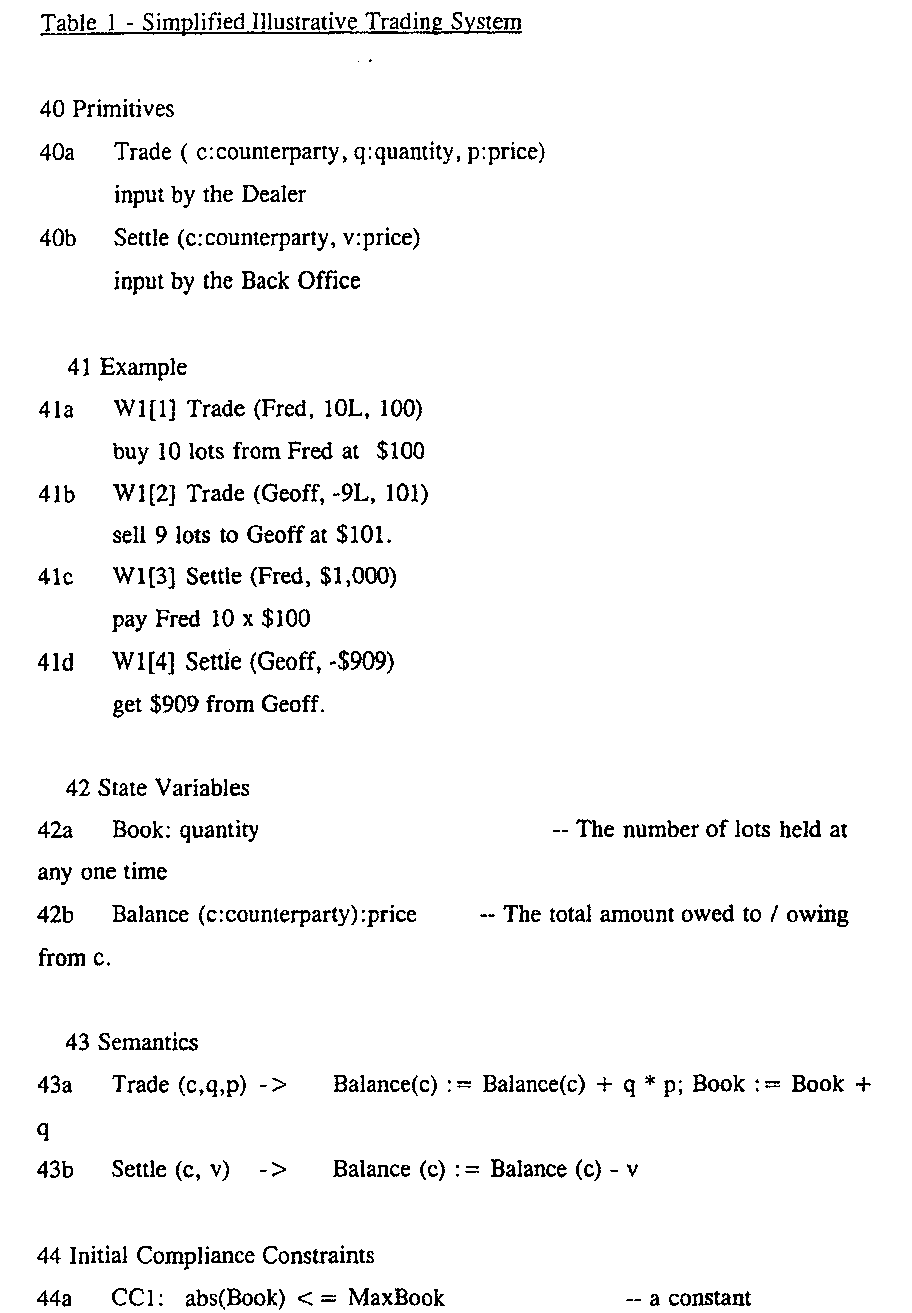

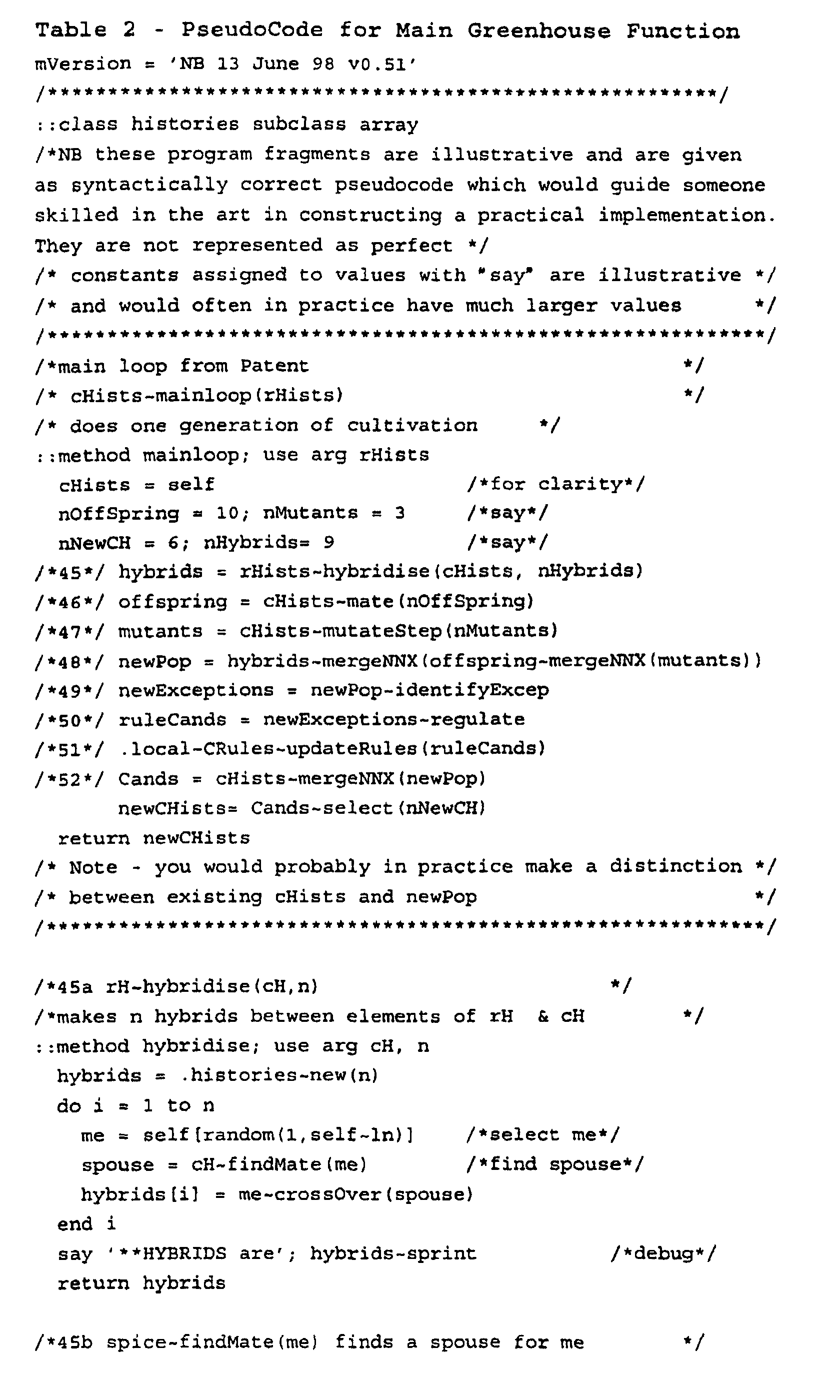

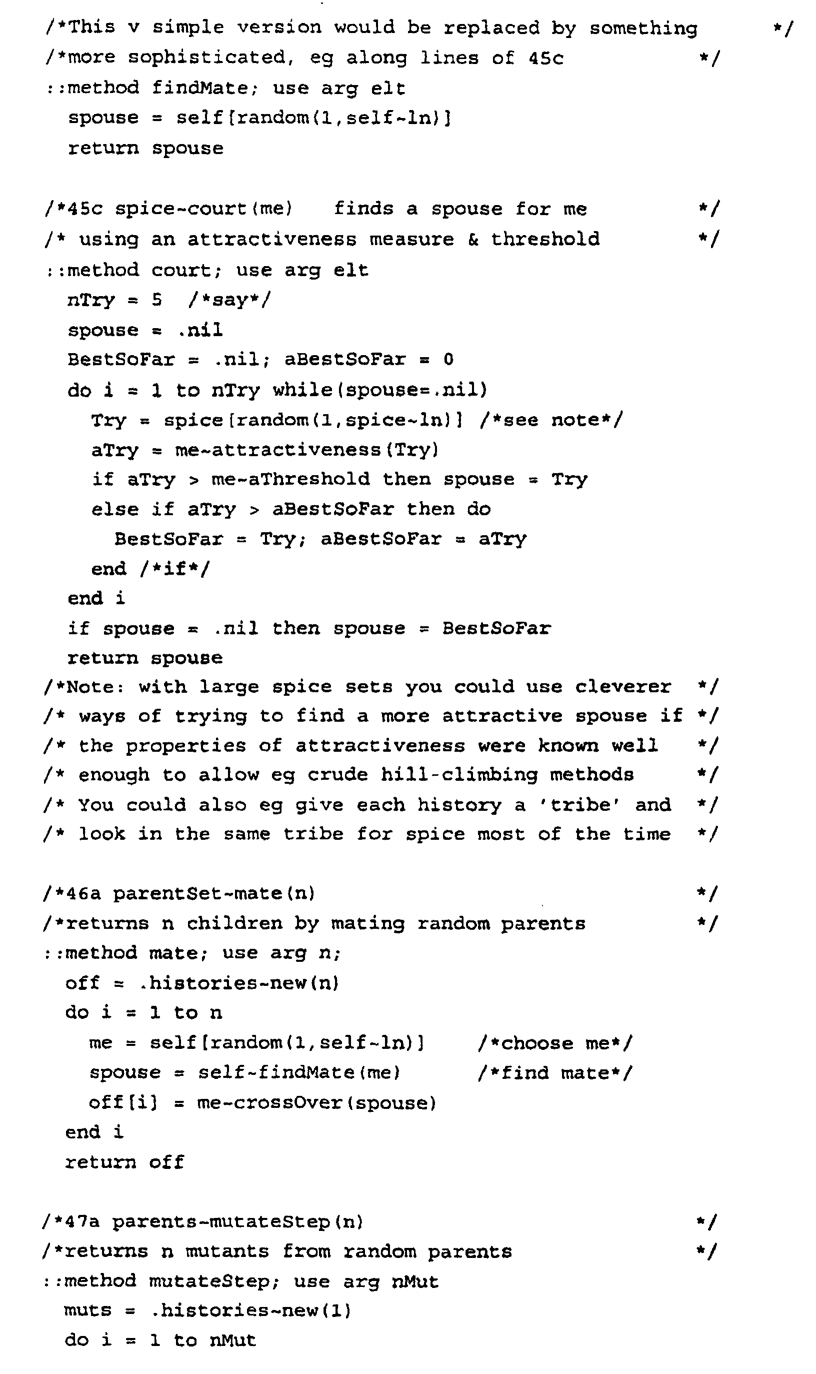

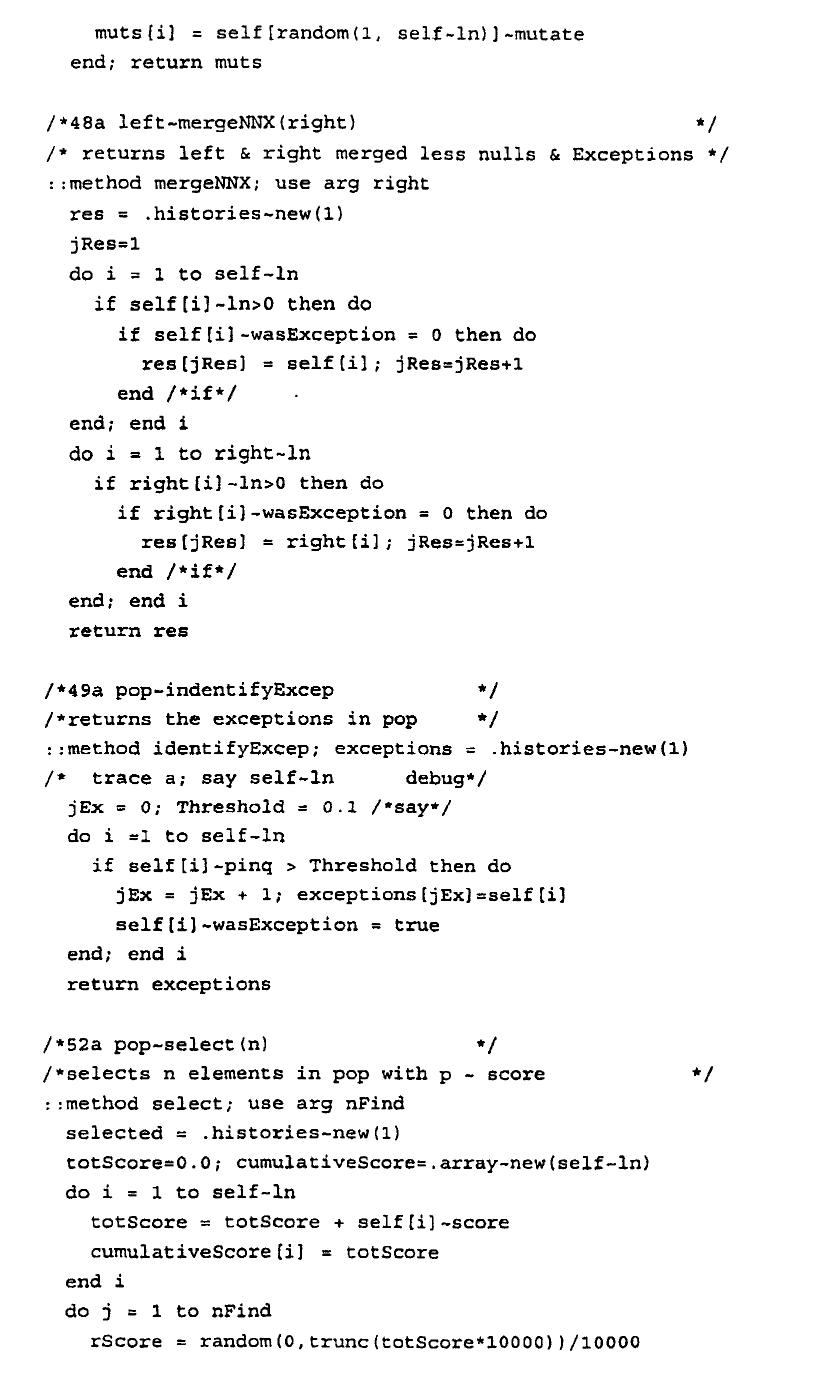

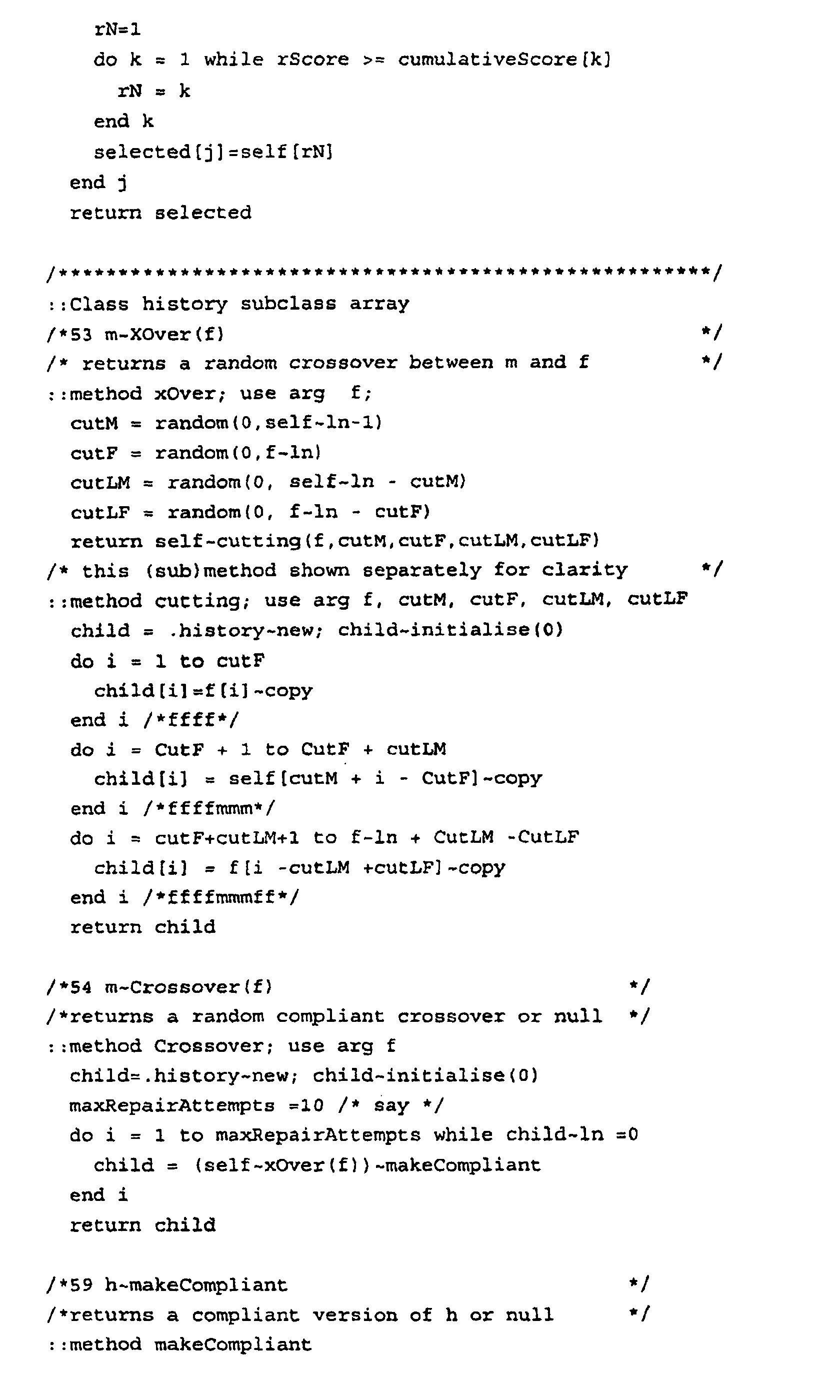

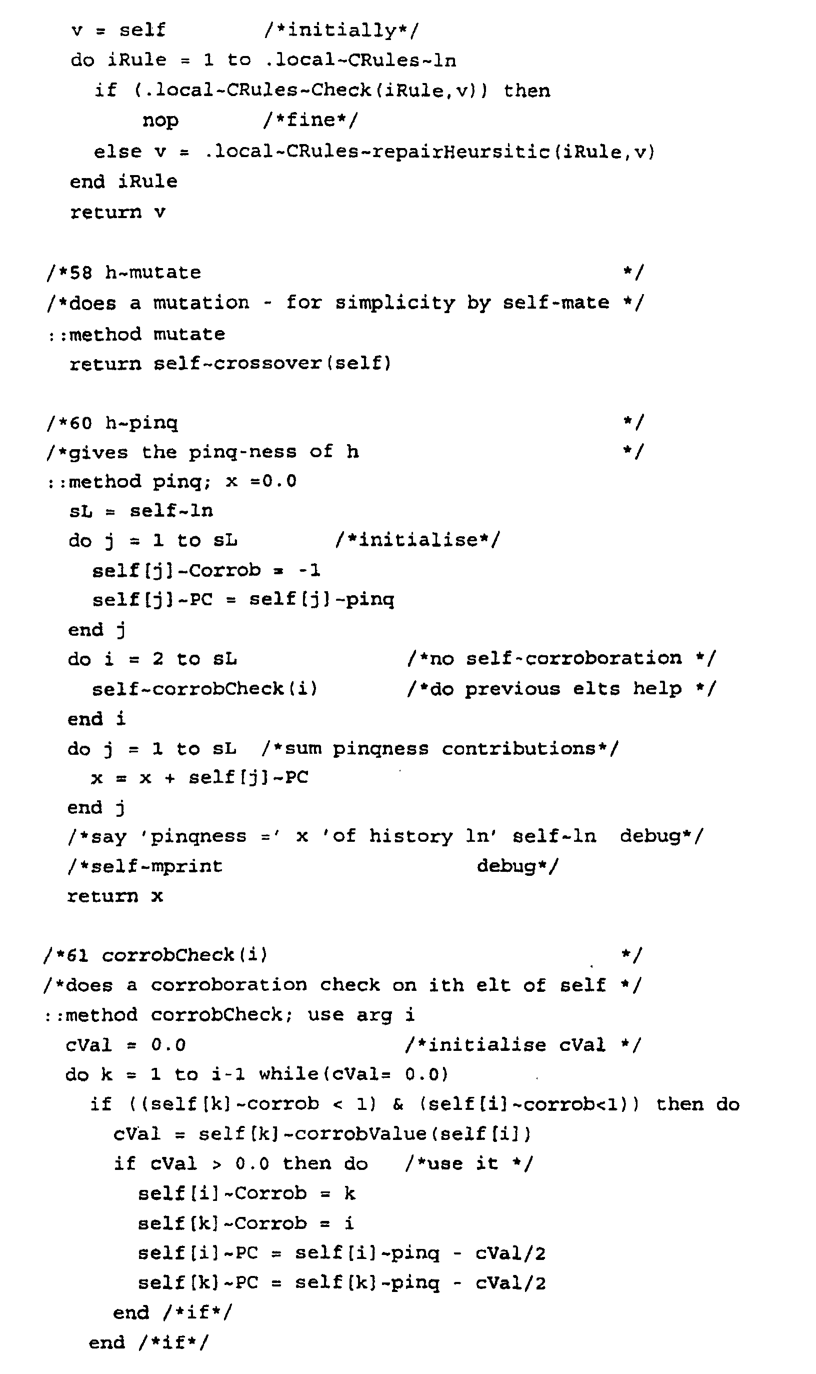

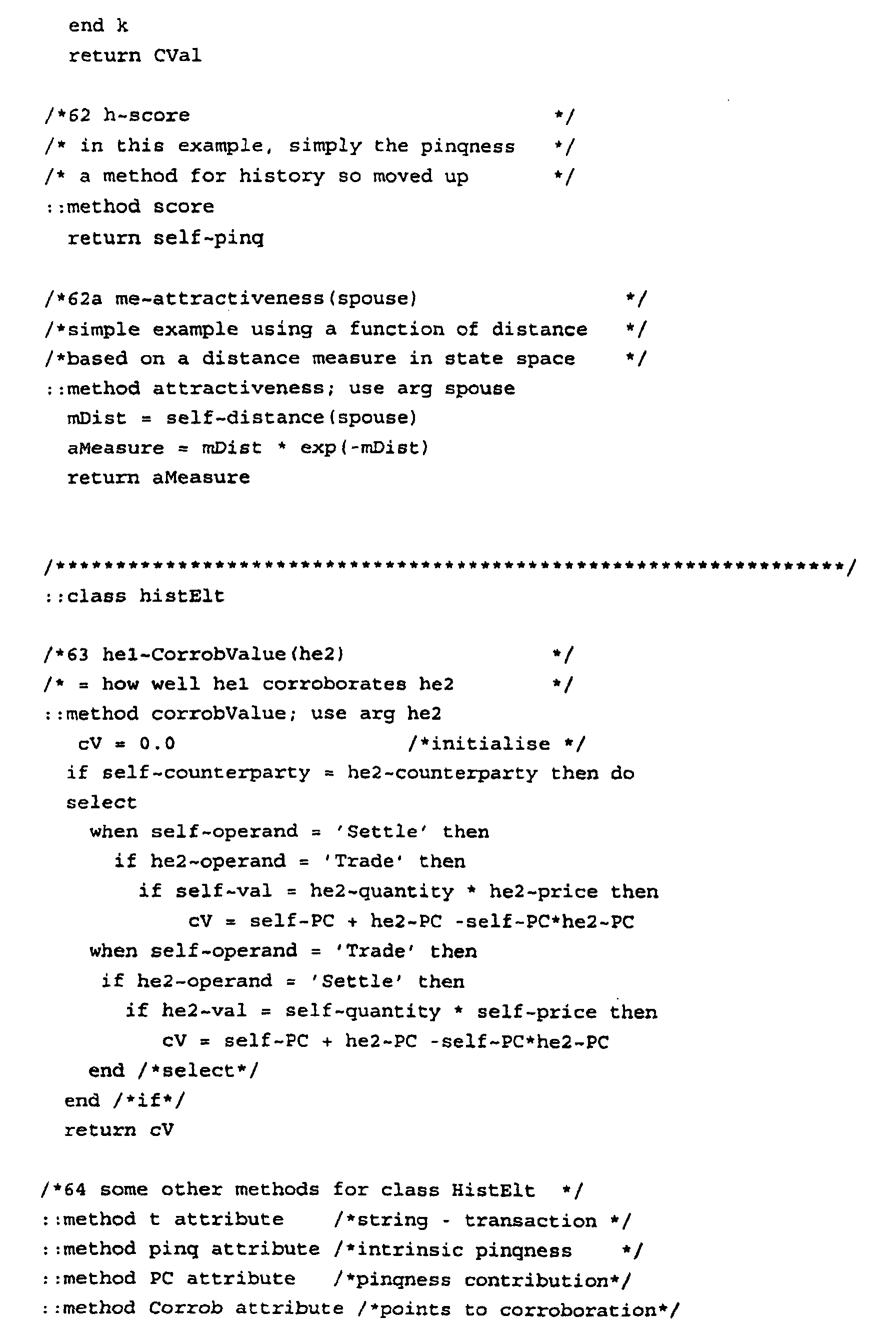

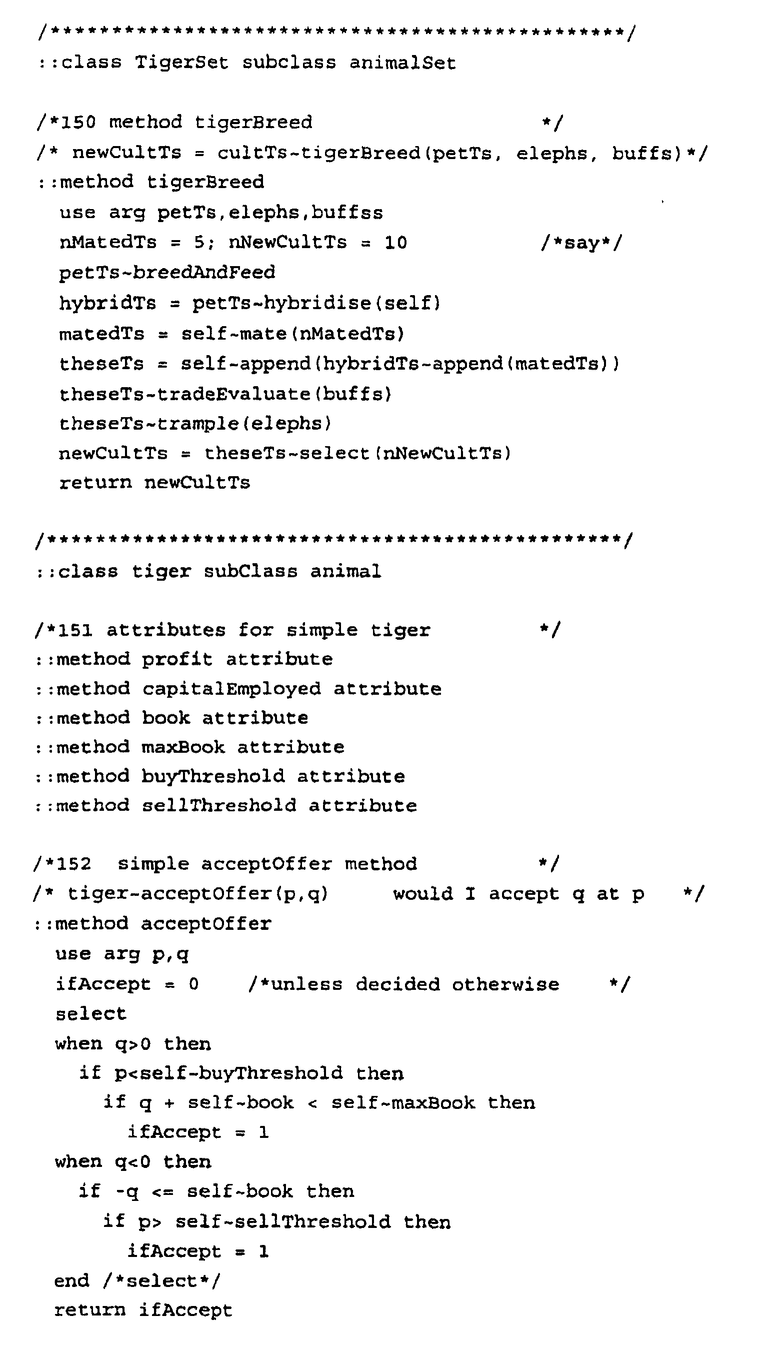

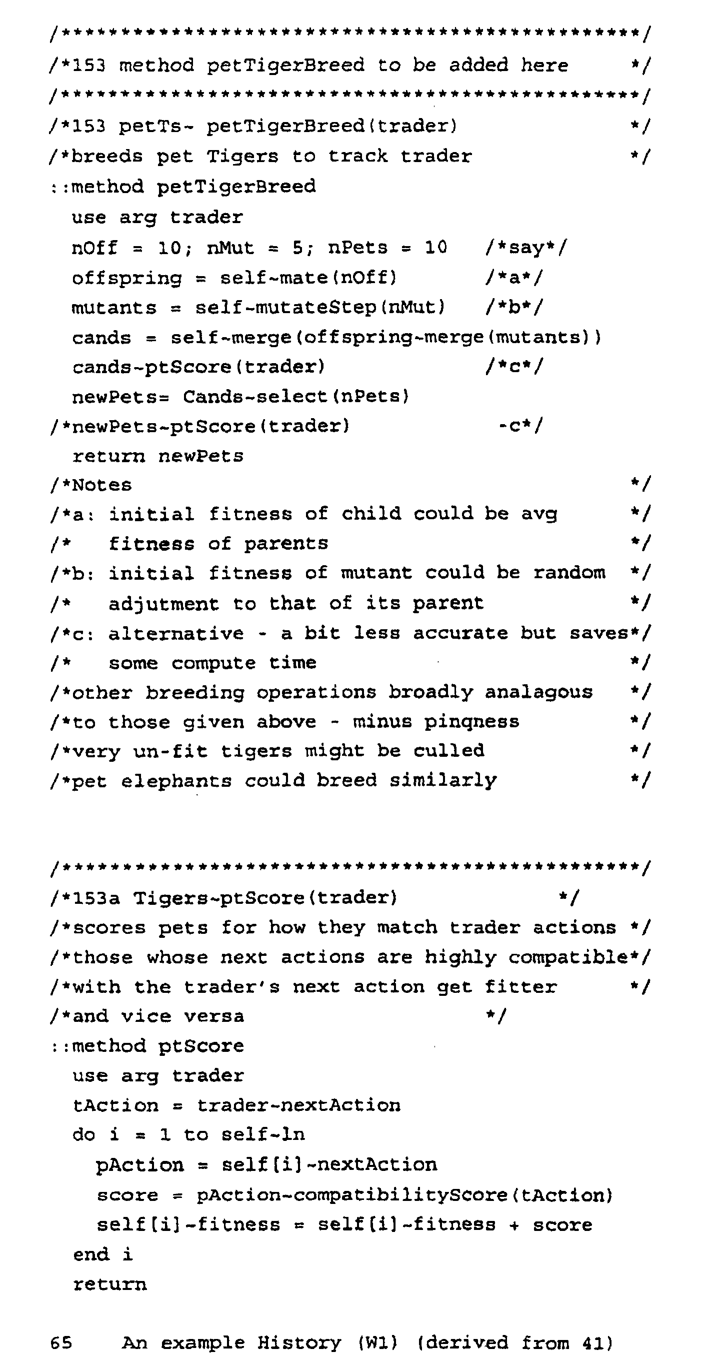

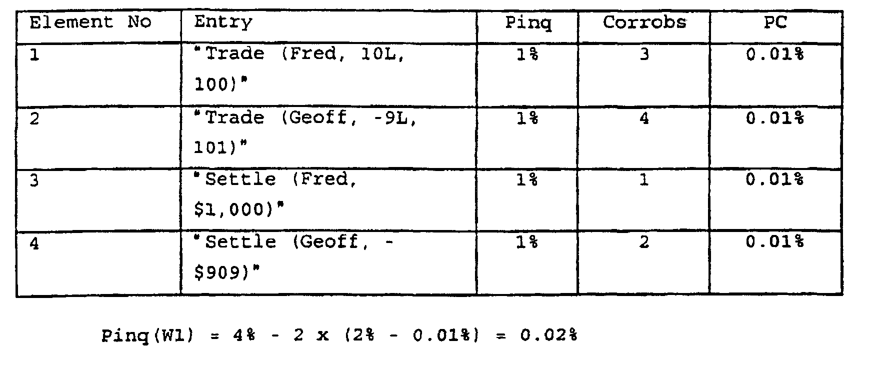

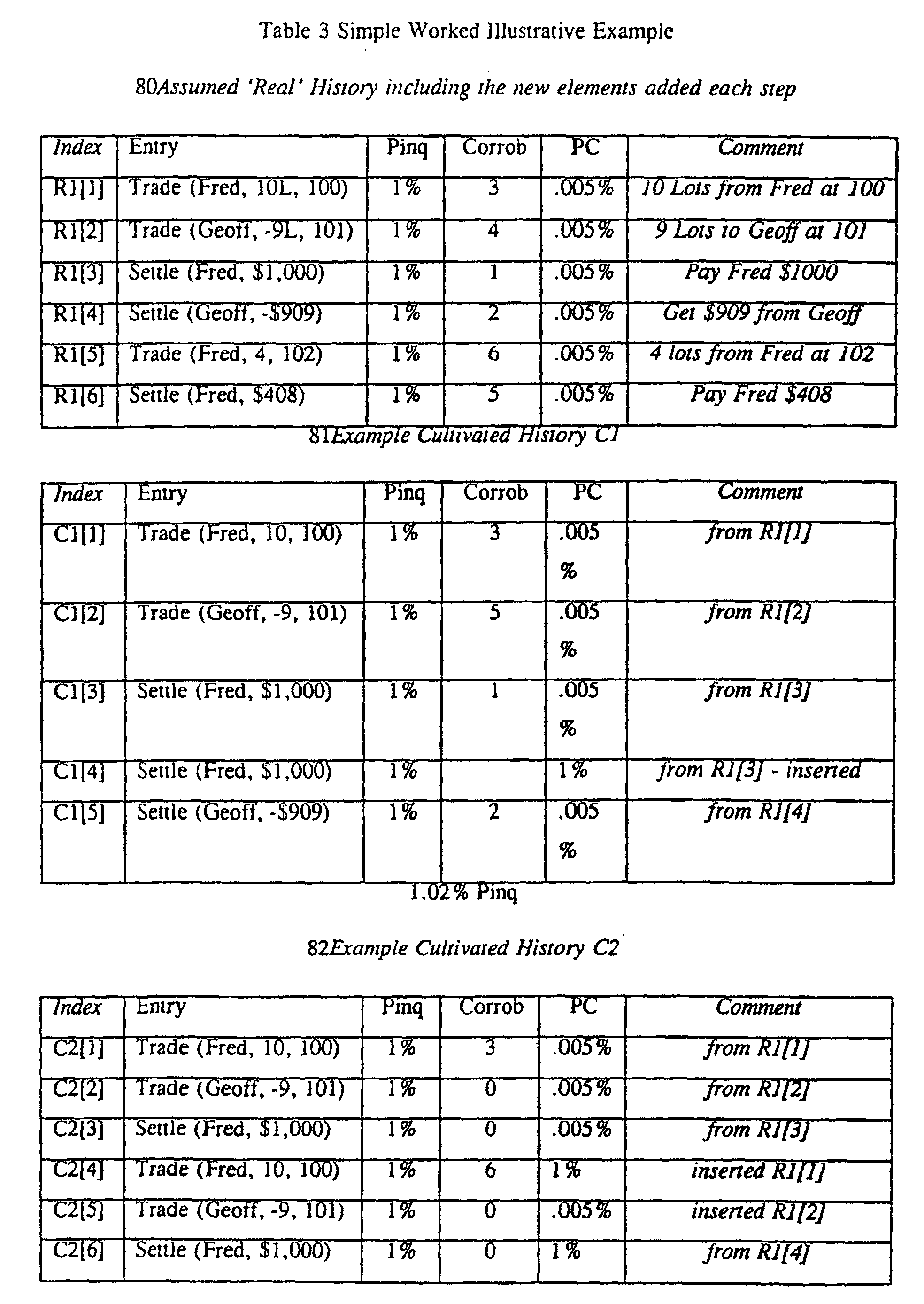

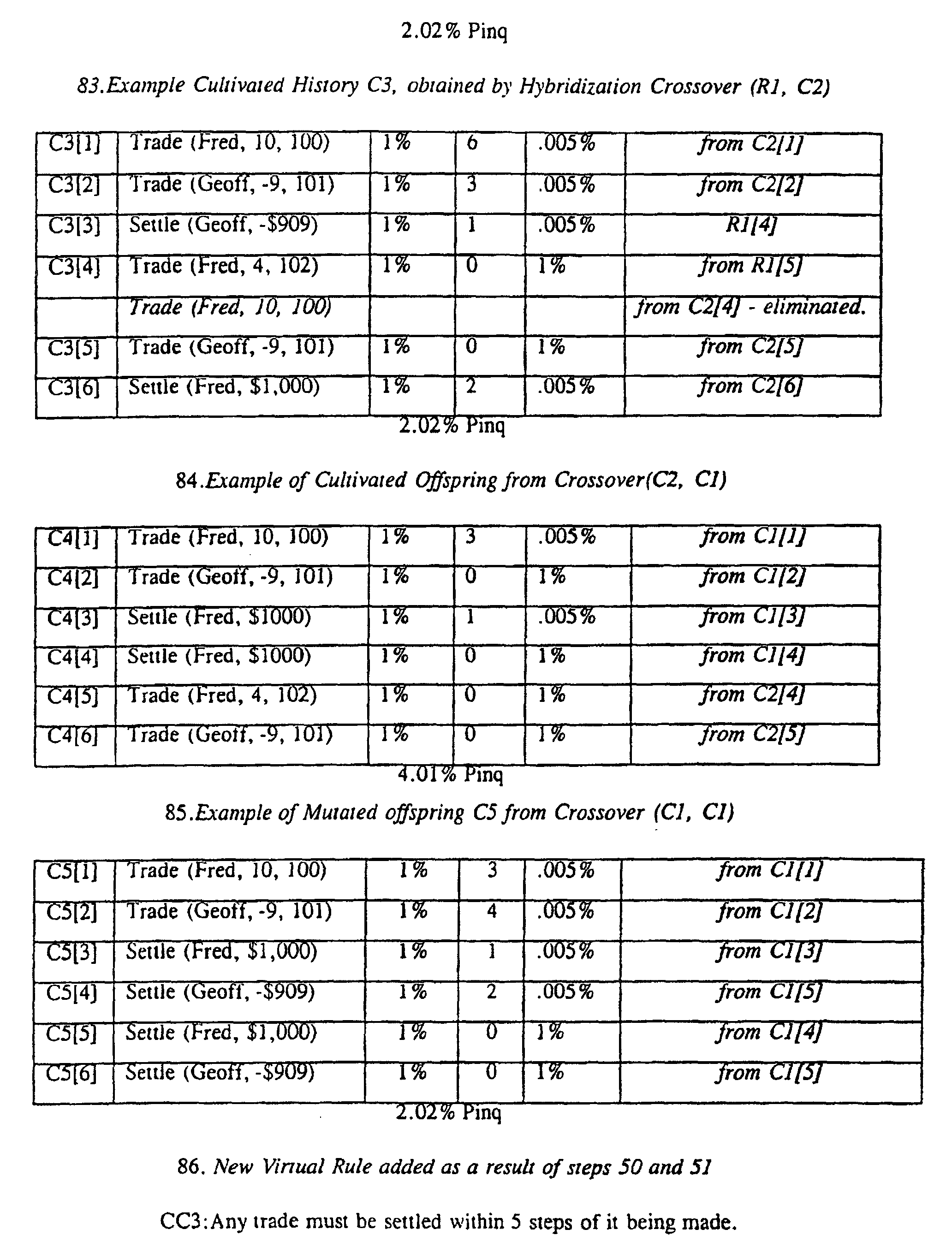

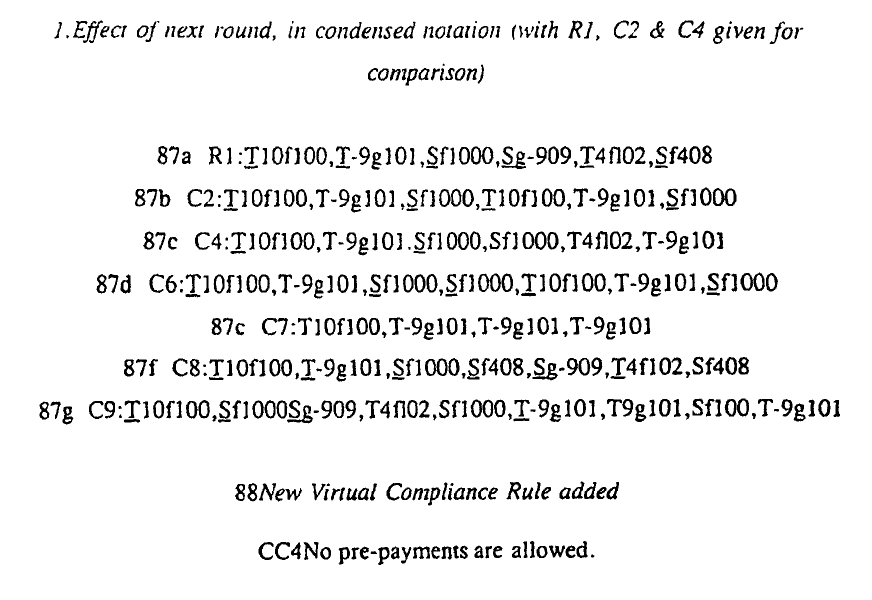

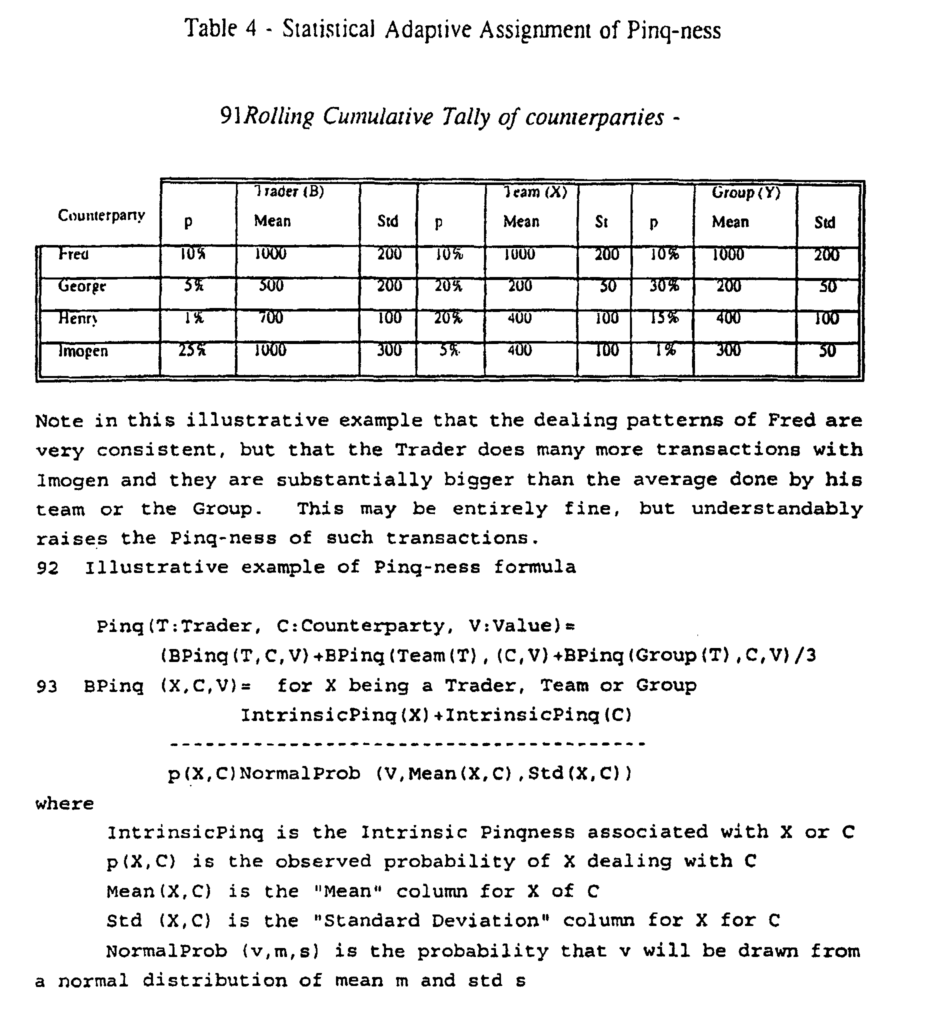

## Claims

1. A system for generating compliance rules, the system comprising
a compliance rule memory (19) for storing compliance rules;
generation means for automatically generating virtual trading histories virtual trading behaviours and/or virtual compliance rules (25);
selection means for automatically selecting virtual trading histories, virtual trading behaviours and/or virtual compliance rules; and
updating means (31) for storing virtual compliance rules in the compliance rule memory, wherein the virtual compliance rules have been developed with reference to the selected virtual trading histories, virtual trading behaviours and/or virtual compliance rules.

2. A system according to claim 1 further comprising a compliance monitor which monitors transactions carried out on a real trading system with reference to the compliance rules stored in the compliance rule memory.

3. A system according to any of the preceding claims further comprising extraction means (27) for extracting real trading histories, real trading behaviours and/or real compliance rules from the real trading system and inputting the extracted trading histories to the generation means.

4. A system according to any of the preceding claims wherein the generation means generates the virtual trading histories, virtual trading behaviours and/or virtual compliance rules by modifying initial trading histories, trading behaviours and/or compliance rules in accordance with a genetic algorithm.

5. A system according to any of the preceding claims further comprising regularisation means for determining the virtual compliance rules from the selected virtual trading histories or behaviours.

6. A system according to any of the preceding claims wherein the selection means comprises
scoring mean (63) for estimating an apparent level of irregularity of the virtual trading histories; and
identification means for selecting virtual trading histories on the basis of their estimated apparent level of irregularity.

7. A system according to claim 6 wherein the virtual trading histories each comprise a sequence of virtual transactions, and wherein the scoring means assigns an individual apparent level of irregularity to each virtual transaction, assigns a level of corroboration to some of the virtual transactions, and estimates the apparent level of irregularity of the virtual trading history in accordance with the individual apparent levels of irregularity and the levels of corroboration.

8. A system according to claim 6 or 7 wherein the virtual trading histories each comprise a sequence of virtual transactions, and wherein the scoring means assigns an individual level of irregularity to each virtual transaction by reference to statistical criteria based on the real trading histories carried out on the real trading system.

9. A system according to any of the preceding claims wherein the generation means is adapted to check virtual dealing histories against one or more current compliance rules stored in the compliance rule memory.

10. A trading system comprising
a real trading system; and
a system for generating compliance rules according to any of the preceding claims.

11. A trading system according to claim 10 wherein the real trading system comprises a plurality of trading computers connected to a common network, and wherein the system for generating compliance rules is implemented by one or more of the trading computers.

12. A method of generating compliance rules, the method comprising
automatically generating virtual trading histories, virtual trading behaviours and/or virtual compliance rules;
automatically selecting virtual trading histories, virtual trading behaviours and/or virtual compliance rules; and
storing virtual compliance rules in a compliance rule memory with reference to the selected virtual compliance rules, virtual trading histories or virtual trading behaviours.

13. A system for generating trading behaviours, the system comprising a trading behaviour memory for storing trading behaviours (97a-97f); breeding means (99) for automatically generating virtual trading behaviours; growth regulation means (98) for automatically comparing the virtual trading behaviours with the actions of a real trader, and automatically selecting virtual trading behaviours which correspond with the actions of the real trader; and updating means (30) for storing the selected virtual trading behaviours in the trading behaviour memory.

14. A system according to claim 13 wherein the growth regulation means selects virtual trading behaviours by monitoring the performance of the virtual trading behaviours in a virtual trading system, and selecting virtual trading behaviours which make money in the virtual trading system.

15. A method of generating trading behaviours, the method comprising automatically generating virtual trading behaviours; automatically comparing the virtual trading behaviours with the actions of a real trader; automatically selecting virtual trading behaviours which correspond with the actions of the real trader; and storing the selected virtual trading behaviours in a trading behaviour memory.

## Patentansprüche

1. System zum Erzeugen von Einhaltungsregeln, wobei das System umfasst:
einen Einhaltungsregelspeicher (19) zum Speichern von Einhaltungsregeln; ein Erzeugungsmittel zum automatischen Erzeugen von virtuellen Handelshistorien, virtuellen Handelsverhalten und/oder virtuellen Einhaltungsregeln (25); ein Auswahlmittel zum automatischen Auswählen von virtuellen Handelshistorien, virtuellen Handelsverhalten und/ oder virtuellen Einhaltungsregeln; und
ein Aktualisierungsmittel (31) zum Speichern virtueller Einhaltungsregeln in dem Einhaltungsregelspeicher, wobei die virtuellen Einhaltungsregeln mit Bezug auf die ausgewählten virtuellen Handelshistorien, virtuellen Handelsverhalten und/oder virtuellen Einhaltungsregeln entwickelt wurden.

2. System gemäß Anspruch 1, ferner umfassend einen Einhaltungsmonitor, der auf einem realen Handelssystem durchgeführte Transaktionen mit Bezug auf die in dem Einhaltungsregelspeicher gespeicherten Einhaltungsregeln überwacht.

3. System gemäß einem der vorhergehenden Ansprüche, ferner umfassend ein Extraktionsmittel (27) zum Extrahieren realer Handelshistorien, realer Handelsverhalten und/oder realer Einhaltungsregeln aus dem realen Handelssystem und Eingeben der extrahierten Handelshistorien in das Erzeugungsmittel.

4. System gemäß einem der vorhergehenden Ansprüche, bei dem das Erzeugungsmittel die virtuellen Handelshistorien, virtuellen Handelsverhalten und/oder virtuellen Einhaltungsregeln durch Modifizieren anfänglicher Handelshistorien, Handelsverhalten und/oder Einhaltungsregeln in Übereinstimmung mit einem genetischen Algorithmus erzeugt.

5. System gemäß einem der vorhergehenden Ansprüche, ferner umfassend ein Regelungsmittel zum Bestimmen der virtuellen Einhaltungsregeln aus den ausgewählten virtuellen Handelshistorien oder -verhalten.

6. System gemäß einem der vorhergehenden Ansprüche, bei dem das Auswahlmittel umfasst:
ein Auswertmittel (63) zum Abschätzen eines scheinbaren Unregelmäßigkeitsgrads der virtuellen Handelshistorien; und
ein Identifikationsmittel zum Auswählen virtueller Handelshistorien auf der Grundlage ihres geschätzten scheinbaren Unregelmäßigkeitsgrads.

7. System gemäß Anspruch 6, bei dem die virtuellen Handelshistorien jeweils eine Sequenz von virtuellen Transaktionen umfassen, und wobei das Auswertmittel jeder virtuellen Transaktion einen individuellen scheinbaren Unregelmäßigkeitsgrad zuweist, einigen der virtuellen Transaktionen einen Bekräftigungsgrad zuweist und den scheinbaren Unregelmäßigkeitsgrad der virtuellen Handelshistorie in Übereinstimmung mit den individuellen scheinbaren Unregelmäßigkeitsgraden und den Bekräftigungsgraden schätzt.

8. System gemäß Anspruch 6 oder 7, bei dem die virtuellen Handelshistorien jeweils eine Sequenz von virtuellen Transaktionen umfassen, und wobei das Auswertmittel jeder virtuellen Transaktion einen individuellen Unregelmäßigkeitsgrad durch Bezug auf statistische Kriterien zuweist, die auf den realen Handelsgeschichten basieren, was am realen Handelssystem ausgeführt wurde.

9. System gemäß einem der vorhergehenden Ansprüche, bei dem das Erzeugungsmittel angepasst ist, um virtuelle Verhaltenshistorien gegen eine oder mehrere in dem Einhaltungsregelspeicher gespeicherten gegenwärtige Einhaltungsregeln zu prüfen.

10. Handelssystem umfassend
ein reales Handelssystem; und
ein System zum Erzeugen von Einhaltungsregeln gemäß einem der vorhergehenden Ansprüche.

11. Handelssystem gemäß Anspruch 10, bei dem das reale Handelssystem eine Mehrzahl von mit einem gemeinsamen Netzwerk verbundene Handelscomputer umfasst, und wobei das System zum Erzeugen von Einhaltungsregeln von einem oder mehreren der Handelscomputer implementiert wird.

12. Verfahren zum Erzeugen von Einhaltungsregeln, wobei das Verfahren umfasst:
ein automatisches Erzeugen virtueller Handelshistorien, virtueller Handelsverhalten und/oder virtueller Einhaltungsregeln;
automatisches Auswählen virtueller Handelshistorien, virtueller Handelsverhalten und/oder virtueller Einhaltungsregeln; und
Speichem virtueller Einhaltungsregeln in einem Einhaltungsregelspeicher mit Bezug auf die ausgewählten virtuellen Einhaltungsregeln, virtuellen Handelsgeschichten und virtuellen Handelsverhalten.

13. System zum Erzeugen von Handelsverhalten, wobei das System einen Handelsverhaltensspeicher zum Speichem von Handelsverhalten (97a - 97f); ein Erzeugungsmittel (99) zum automatischen Erzeugen virtueller Handelsverhalten; ein Wachstumsregelungsmittel (98) zum automatischen Vergleichen der virtuellen Handelsverhalten mit den Aktionen eines realen Händlers und zum automatischen Auswählen virtueller Handelsverhalten, die den Aktionen des realen Händlers entsprechen; und ein Aktualisierungsmittel (30) zum Speichern der ausgewählten virtuellen Handelsverhalten in dem Handelsverhaltenspeicher umfasst.

14. System gemäß Anspruch 13, bei dem das Wachstumsregelungsmittel virtuelle Handelsverhalten durch Überwachen der Leistung der virtuellen Handelsverhalten in einem virtuellen Handelssystem und durch Auswählen virtueller Handelsverhalten, die in dem virtuellen Handelssystem Geld verdienen, auswählt.

15. Verfahren zum Erzeugen von Handelsverhalten, wobei das Verfahren umfasst: automatisches Erzeugen virtueller Handelsverhalten; automatisches Vergleichen der virtuellen Handelsverhalten mit den Aktionen eines realen Händlers; automatisches Auswählen virtueller Handelsverhalten, die den Aktionen realer Händler entsprechen; und Speichern der ausgewählten virtuellen Handelsverhalten in einem Handelsverhaltenspeicher.

## Revendications

1. Système de production de règles de conformité, le système comprenant:
une mémoire (19) pour règles de conformité, pour stocker des règles de conformité ;
un moyen de génération, pour générer automatiquement des historiques commerciaux virtuels, des comportements commerciaux virtuels et/ou des règles de conformité virtuelles (25) ;
un moyen de sélection, pour sélectionner automatiquement des historiques commerciaux virtuels, des comportements commerciaux virtuels et/ou des règles de conformité virtuelles ; et
un moyen de mise à jour (31) pour stocker des règles de conformité virtuelles dans la mémoire pour règles de conformité, dans lequel les règles de conformité virtuelles ont été développées en se référant aux historiques commerciaux virtuels, aux comportements commerciaux virtuels et/ou aux règles de conformité virtuelles sélectionnés.

2. Système selon la revendication 1, comprenant en outre un contrôleur de conformité, qui contrôle des transactions effectuées sur un système commercial réel en se référant aux règles de conformité stockées dans la mémoire pour règles de conformité.

3. Système selon l'une quelconque des revendications précédentes, comprenant en outre un moyen d'extraction (27), pour extraire des historiques commerciaux réels, des comportements commerciaux réels et/ou des règles de conformité réelles à partir du système commercial réel et pour entrer dans le moyen de génération, les historiques commerciaux extraits.

4. Système selon l'une quelconque des revendications précédentes, dans lequel le moyen de génération génère les historiques commerciaux virtuels, les comportements commerciaux virtuels et/ou les règles de conformité virtuelles en modifiant les historiques commerciaux, les comportements commerciaux et/ou les règles de conformité initiaux, en fonction d'un algorithme génétique.

5. Système selon l'une quelconque des revendications précédentes, comprenant en outre un moyen de régularisation, pour déterminer les règles de conformité virtuelles à partir des historiques ou comportements commerciaux virtuels sélectionnés.

6. Système selon l'une quelconque des revendications précédentes, dans lequel le moyen de sélection comprend:
un moyen de cotation (63), pour estimer un niveau apparent d'irrégularité des historiques commerciaux virtuels ; et un moyen d'identification pour sélectionner des historiques commerciaux virtuels sur base de leur niveau apparent estimé d'irrégularité.

7. Système selon la revendication 6, dans lequel les historiques commerciaux virtuels comprennent chacun une séquence de transactions virtuelles, et dans lequel le moyen de cotation assigne un niveau apparent individuel d'irrégularité à chaque transaction virtuelle, assigne un niveau de corroboration à certaines des transactions virtuelles, et estime le niveau apparent d'irrégularité de l'historique commercial virtuel en fonction des niveaux apparents individuels d'irrégularité et des niveaux de corroboration.

8. Système selon la revendication 6 ou 7, dans lequel les historiques commerciaux virtuels comprennent chacun une séquence de transactions virtuelles, et dans lequel le moyen de cotation assigne un niveau individuel d'irrégularité à chaque transaction virtuelle en se référant à des critères statistiques basés sur les historiques commerciaux réels pratiqués dans le système commercial réel.

9. Système selon l'une quelconque des revendications précédentes, dans lequel le moyen de génération est adapté pour vérifier des historiques de tractation virtuels par rapport à une ou plusieurs règles de conformité courantes stockées dans la mémoire pour règles de conformité.

10. Système commercial comprenant:
un système commercial réel ; et
un système de production de règles de conformité selon l'une quelconque des revendications précédentes.

11. Système commercial selon la revendication 10, dans lequel le système commercial réel comprend plusieurs ordinateurs commerciaux reliés à un réseau commun, et dans lequel le système dé production des règles de conformité est mis en oeuvre par un ou plusieurs des ordinateurs commerciaux.

12. Procédé de génération de règles de conformité, le procédé comprenant les étapes consistant à :
générer automatiquement des historiques commerciaux virtuels, des comportements commerciaux virtuels et/ou des règles de conformité virtuelles ;
sélectionner automatiquement des historiques commerciaux virtuels, des comportements commerciaux virtuels et/ou des règles de conformité virtuelles ; et
stocker des règles de conformité virtuelles dans une mémoire pour règles de conformité en se référant aux règles de conformité virtuelles sélectionnées, aux historiques commerciaux virtuels ou aux comportements commerciaux virtuels.

13. Système de production de comportements commerciaux, le système comprenant une mémoire pour comportements commerciaux, pour stocker des comportements commerciaux (97a-97f) ; un moyen de reproduction (99) pour générer automatiquement des comportements commerciaux virtuels ; un moyen de régulation de la croissance (98), pour comparer automatiquement les comportements commerciaux virtuels avec les actions d'un commerçant réel, et sélectionner automatiquement des comportements commerciaux virtuels qui correspondent aux actions du commerçant réel ; et un moyen de mise à jour (30) pour stocker dans la mémoire des comportements commerciaux, les comportements commerciaux virtuels sélectionnés.

14. Système selon la revendication 13, dans lequel le moyen de régulation de la croissance sélectionne des comportements commerciaux virtuels en contrôlant la performance des comportements commerciaux virtuels dans un système commercial virtuel, et en sélectionnant des comportements commerciaux virtuels qui génèrent de l'argent dans le système commercial virtuel.

15. Procédé de production de comportements commerciaux, le procédé comprenant les étapes consistant à générer automatiquement des comportements commerciaux virtuels ; comparer automatiquement les comportements commerciaux virtuels avec les actions d'un commerçant réel ; sélectionner automatiquement les comportements commerciaux virtuels qui correspondent aux actions du commerçant réel ; et stocker les comportements commerciaux virtuels sélectionnés dans une mémoire pour comportements commerciaux.
